# FASCICULE DE BREVET EUROPEEN

(11) **EP 3 476 582 B1**
(45) Date de publication et mention de la délivrance du brevet: **09.07.2025**
(21) Numéro de dépôt: 18202540.3
(22) Date de dépôt: 25.10.2018
(51) Int. Cl.: B29D 11/00, B29C 45/27, B29C 33/00, B29C 45/38

(54) **DISPOSITIF DE MOULAGE DE LENTILLES ET PROCEDE DE FABRICATION DE LENTILLES**
VORRICHTUNG ZUM FORMEN VON LINSEN, UND HERSTELLUNGSVERFAHREN VON LINSEN
LENS MOULDING DEVICE AND LENS MANUFACTURING METHOD

(30) Priorité: 31.10.2017 FR 1760295
(43) Date de publication de la demande: 01.05.2019
(73) Titulaire: Commissariat à l'Energie Atomique et aux Energies Alternatives, 75015 Paris (FR)
(72) Inventeur: RITOU, Arnaud, 38000 GRENOBLE (FR); VOARINO, Philippe, 06000 NICE (FR)
(74) Mandataire: INNOV-GROUP

(56) Documents cités:
- FR-A1- 3 029 038
- US-A1- 2004 119 204
- US-A1- 2008 144 324
- US-A1- 2011 286 222
- US-A9- 2016 153 639
- US-B1- 6 625 379

## Description

### Domaine de l'invention

Le domaine de l'invention concerne le moulage de lentilles, en particulier de lentilles d'une optique non-imageante pour composants optoélectroniques tels que des cellules photovoltaïques, ou des diodes électroluminescentes.

### Etat de la technique

La demande de brevet français FR3029038 décrit un procédé de fabrication d'un concentrateur photovoltaïque à structure optique munie d'un double étage de lentilles utilisant un moule pour former une pièce moulée comportant des lentilles liées, c'est-à-dire fixées, à une plaque transparente. Cette pièce moulée est obtenue par injection d'un produit de moulage dans une empreinte du moule. Ce produit de moulage est ensuite solidifié d'où il résulte la formation d'une pièce moulée en produit de moulage dans l'empreinte, et la présence d'un cordon de moulage dans un passage ayant permis l'injection du produit de moulage dans l'empreinte du moule. Un inconvénient de la solution décrite dans cette demande de brevet français FR3029038 est qu'elle peut présenter un risque de détérioration de la liaison entre la pièce moulée, formant les lentilles, et la plaque transparente lors du démoulage de la pièce moulée. La détérioration de la liaison entre la plaque transparente et la pièce moulée présente l'inconvénient de réduire l'efficacité du concentrateur optique. Par ailleurs, cette détérioration de la liaison entre la plaque transparente et la pièce moulée peut déformer les lentilles, et donc détériorer leur fonctionnement.

Le document « Micro-Concentrator with a Self-Assembly Process » de A. Ritou et al. publié dans AIP Conference Proceedings 1766, 080005-1 - 080005-6 (2016) et issu de « 12th International Conference on Concentrator Photovoltaïc Systems (CPV-12) » décrit un procédé de fabrication d'un double étage de lentilles ainsi que l'assemblage d'un module photovoltaïque à concentration optique à partir du double étage de lentilles formé. L'un des étages de lentilles reste lié, c'est-à-dire fixé, à une plaque transparente ayant participé à mouler une pièce formant ledit étage de lentilles. Le procédé de fabrication décrit dans ce document présente aussi l'inconvénient d'un risque de détérioration de la liaison entre la plaque transparente et l'étage de lentilles fixé à la plaque transparente lors du démoulage de l'étage de lentilles.

On comprend de ce qui a été décrit ci-dessus qu'il existe un besoin de trouver une solution permettant d'éviter la détérioration de la liaison entre une pièce moulée et une plaque transparente lors du démoulage de la pièce moulée.

### Objet de l'invention

L'invention a pour but d'améliorer le démoulage d'une pièce moulée formant une pluralité de lentilles. Cette pièce moulée doit rester fixée, c'est-à-dire liée, à une plaque transparente ayant participé au moulage de ladite pièce. Notamment, l'invention cherche à éviter la détérioration de la liaison entre la pièce moulée et la plaque transparente lors du démoulage de la pièce moulée.

A cet effet, l'invention a pour objet un dispositif de moulage pour former des lentilles par moulage, ledit dispositif de moulage comportant :
- un élément de moulage comportant des cavités formées dans une face de l'élément de moulage,
- une plaque transparente maintenue par rapport à l'élément de moulage de sorte à former, avec les cavités, une empreinte destinée à permettre la formation d'une pluralité de lentilles,
- au moins un passage d'injection destiné à permettre une introduction de produit de moulage dans l'empreinte, le passage d'injection étant ménagé entre la plaque transparente et l'élément de moulage,
- un injecteur de produit de moulage agencé de sorte à permettre une introduction de produit de moulage dans le passage d'injection,
ce dispositif de moulage est caractérisé en ce que l'injecteur est amovible, et en ce que ledit dispositif de moulage est configuré de sorte à autoriser un retrait de l'injecteur tout en conservant le maintien de la plaque transparente par rapport à l'élément de moulage.

Un tel dispositif de moulage présente l'avantage de permettre le retrait de l'injecteur avant démoulage de la pièce moulée dans l'empreinte de sorte à autoriser une rupture d'au moins un cordon, dit « cordon de moulage », dont la présence est résultante de l'injection de produit de moulage dans l'empreinte. L'agencement des composants du dispositif de moulage permet de mettre en œuvre une rupture du cordon de moulage avant de procéder au démoulage de la pièce moulée depuis l'élément de moulage afin de préserver la liaison entre la plaque transparente et la pièce moulée.

Le dispositif de moulage peut comporter une ou plusieurs des caractéristiques suivantes :
- le dispositif de moulage comporte un organe d'assemblage fixant la position de plaque transparente par rapport à l'élément de moulage ;
- l'organe d'assemblage sollicite la plaque transparente vers une portée d'appui périphérique discontinue de la face de l'élément de moulage dans laquelle sont formées les cavités ;
- l'organe d'assemblage comporte :
   - au moins un premier organe de fixation,
   - au moins un deuxième organe de fixation,
   - deux cadres entre lesquels la plaque transparente est agencée, lesdits cadres étant assemblés l'un à l'autre par ledit au moins un premier organe de fixation de sorte à enserrer la plaque transparente, et l'assemblage des deux cadres enserrant la plaque transparente étant monté à l'élément de moulage par ledit au moins un deuxième organe de fixation ;
- le dispositif de moulage comporte au moins un premier élément de fixation assurant un maintien de l'injecteur par rapport à l'élément de moulage, et au moins un deuxième élément de fixation configuré pour maintenir l'injecteur par rapport à la plaque transparente ;
- le premier élément de fixation est une vis traversant l'injecteur et vissée dans l'élément de moulage, et le deuxième élément de fixation est une vis traversant les cadres et vissée dans l'injecteur ;
- le dispositif de moulage comporte une pluralité de passages d'injection formant chacun un canal d'injection reliant l'empreinte à l'injecteur ;
- l'injecteur comporte :
   - une rainure fermée à ses extrémités longitudinales, et
   - des encoches, chaque encoche étant agencée de sorte à mettre la rainure en communication fluidique avec l'un des passages d'injection ;
- la rainure et les encoches coopèrent avec la plaque transparente pour former un corps creux d'injection à section fermée ;
- la plaque transparente et l'élément de moulage forment un décrochement où est agencé l'injecteur ;
- le dispositif de moulage est tel que :
   - les cavités sont destinées à participer à la formation de premières lentilles d'une optique non-imageante, et la face de l'élément de moulage dans laquelle sont formées les cavités est une première face de l'élément de moulage,
   - l'élément de moulage comporte une deuxième face opposée à sa première face,
   - l'élément de moulage comporte des creux formés dans sa deuxième face, les creux étant destinés à participer à la formation de deuxièmes lentilles de l'optique non-imageante,
   - ledit dispositif de moulage comporte un substrat sur lequel sont connectés des composants optoélectroniques, ledit substrat étant monté à l'élément de moulage de sorte que chaque composant optoélectronique soit associé à un des creux ;
- la plaque transparente comporte un primaire d'adhésion configuré pour permettre l'adhésion d'un produit de moulage solidifié présent dans l'empreinte à ladite plaque transparente.

L'invention est aussi relative à un procédé de fabrication de lentilles, ledit procédé de fabrication comportant les étapes suivantes :
- une étape de fourniture d'un dispositif de moulage pour former des lentilles par moulage, ledit dispositif de moulage comportant :
   ∘ un élément de moulage comportant des cavités formées dans une face de l'élément de moulage,
   ∘ une plaque transparente maintenue par rapport à l'élément de moulage de sorte à former, avec les cavités, une empreinte destinée à permettre la formation d'une pluralité de lentilles,
   ∘ au moins un passage d'injection destiné à permettre une introduction de produit de moulage dans l'empreinte, le passage d'injection étant ménagé entre la plaque transparente et l'élément de moulage,
   ∘ un injecteur de produit de moulage agencé de sorte à permettre une introduction de produit de moulage dans le passage d'injection,
- une étape d'injection d'un produit de moulage à l'aide de l'injecteur d'où il résulte la présence du produit de moulage dans l'injecteur, dans le passage d'injection, et dans l'empreinte,
- une étape de solidification du produit de moulage présent dans l'empreinte, dans le passage d'injection, et dans l'injecteur, le produit de moulage solidifié présent dans l'empreinte formant une pièce moulée comprenant la pluralité de lentilles, la pièce moulée étant fixée à la plaque transparente, le produit de moulage solidifié présent dans le passage d'injection et dans l'injecteur formant un élément en produit de moulage solidifié relié à la pièce moulée,
- une étape de retrait de l'injecteur mise en œuvre après l'étape de solidification, l'étape de retrait étant réalisée alors que la plaque transparente reste maintenue par rapport à l'élément de moulage, et l'étape de retrait de l'injecteur provoquant une rupture de l'élément en produit de moulage solidifié.

Le procédé de fabrication peut comporter une ou plusieurs des caractéristiques suivantes :
- l'étape de retrait de l'injecteur comporte une étape de déplacement de l'injecteur selon une direction opposée à l'élément de moulage, et une étape d'inclinaison de l'injecteur par rapport à la face de la plaque transparente orientée vers l'élément de moulage ;
- le procédé de fabrication comporte, après l'étape de retrait de l'injecteur, une étape de démoulage de la pièce moulée par écartement de la plaque transparente par rapport à l'élément de moulage.

### Description sommaire des dessins

D'autres avantages et caractéristiques ressortiront clairement de la description détaillée qui va suivre de modes particuliers de réalisation de l'invention donnés à titre d'exemples non limitatifs et représentés sur les dessins annexés, dans lesquels :
- La figure 1 représente une vue de dessus d'un dispositif de moulage pour former des lentilles par moulage selon un mode particulier de réalisation de l'invention ;
- La figure 2 représente une vue en perspective de la figure 1 ;
- La figure 3 représente la vue en perspective de la figure 2 pour laquelle des cadres ont été retirés ;
- La figure 4 représente schématiquement une vue en coupe selon A-A du dispositif de moulage de la figure 1 ;
- La figure 5 représente schématiquement une vue en coupe selon B-B du dispositif de moulage de la figure 1 ;
- La figure 6 illustre une réalisation particulière d'une pièce moulée reliée à un élément en produit de moulage solidifié issu d'un chemin d'injection du produit de moulage en amont, selon l'écoulement du produit de moulage au sein du dispositif de moulage, d'une empreinte ayant permis de former la pièce moulée ;
- La figure 7 illustre schématiquement des étapes d'un procédé de fabrication de lentilles selon un mode de réalisation particulier de l'invention,
- La figure 8 illustre une vue de dessus d'un injecteur du dispositif de moulage ;
- La figure 9 illustre une vue en perspective de l'injecteur représenté en figure 8 ;
- La figure 10 représente schématiquement une vue en coupe selon C-C de l'injecteur de la figure 8 ;
- La figure 11 illustre une vue en perspective du dispositif de moulage auquel les cadres et l'injecteur ont été retirés pour permettre la visualisation d'un décrochement destiné à recevoir l'injecteur ;
- La figure 12 illustre une vue d'un élément de moulage du dispositif de moulage, cette vue permettant de visualiser une face de l'élément de moulage dans laquelle sont formés des creux ;
- La figure 13 illustre une vue en coupe transversale d'un dispositif optoélectronique comportant une optique non-imageante obtenue à partir d'un moulage de premières et deuxièmes lentilles en utilisant le dispositif de moulage ;
- La figure 14 est une vue partielle schématique selon une coupe D-D du dispositif de moulage de la figure 1 ;
- La figure 15 est une vue en perspective du dispositif de moulage pour lequel l'injecteur a été retiré.

Dans ces figures, les mêmes références sont utilisées pour désigner les mêmes éléments.

Par ailleurs, les éléments représentés sur les figures ne sont pas nécessairement à l'échelle pour faciliter la lecture des figures.

### Description détaillée

Il est décrit ci-après une pièce moulée du type devant rester liée, c'est-à-dire fixée, à une plaque transparente ayant participé au moulage de la pièce moulée dans une empreinte correspondante. En fait, une étude plus poussée des solutions décrites dans la demande de brevet FR3029038 et dans le document « Micro-Concentrator with a Self-Assembly Process » de A. Ritou et al. publié dans AIP Conference Proceedings 1766, 080005-1 - 080005-6 (2016) et issu de « 12th International Conference on Concentrator Photovoltaïc Systems (CPV-12) » a permis d'identifier que la détérioration de la liaison entre la pièce moulée et la plaque transparente est provoquée par l'arrachement d'au moins un cordon de moulage au cours du démoulage de la pièce moulée. Notamment, le cordon de moulage est formé dans un passage ayant permis l'injection du produit de moulage dans une empreinte correspondante pour former la pièce moulée. En effet, lors du démoulage de la pièce moulée, l'arrachement du cordon de moulage peut générer des contraintes détériorant la liaison entre la pièce moulée et la plaque transparente, cette détérioration pouvant par la suite entraîner une dégradation de la qualité optique des lentilles de la pièce moulée. En ce sens, l'arrachement correspond à une rupture non maîtrisée du cordon de moulage entraînant la détérioration de la liaison évoquée ci-dessus.

Il est décrit ci-après un dispositif de moulage pour former des lentilles par moulage. Un tel dispositif de moulage comporte des composants agencés pour faciliter le démoulage de la pièce moulée comportant une pluralité de lentilles. Cette pluralité de lentilles est donc formée par moulage dans l'empreinte correspondante. En particulier, le dispositif de moulage propose un agencement particulier d'un injecteur de produit de moulage autorisant son retrait tout en permettant le maintien de la pièce moulée dans l'empreinte ayant servie à son moulage. Ceci permet notamment la rupture maîtrisée du cordon de moulage pour conserver une liaison de qualité entre la plaque transparente et la pièce moulée après démoulage de la pièce moulée.

Dans la présente description, le produit de moulage est un produit initialement sous forme liquide, et dont la viscosité permet son écoulement pour remplir l'empreinte en vue de former la pièce moulée par solidification du produit de moulage présent dans l'empreinte. Le produit de moulage peut être un silicone, ou un autre polymère, adapté à la fonction de formation de lentilles par moulage.

Par « à base de », il est entendu « comportant majoritairement ».

Par « sensiblement parallèle », il est entendu exactement parallèle, ou parallèle selon une tolérance de plus ou moins 10 degrés.

Par lentille, il est entendu une lentille optique, c'est-à-dire notamment un système optique permettant de dévier les rayons lumineux, et dont au moins une des faces peut être concave ou convexe.

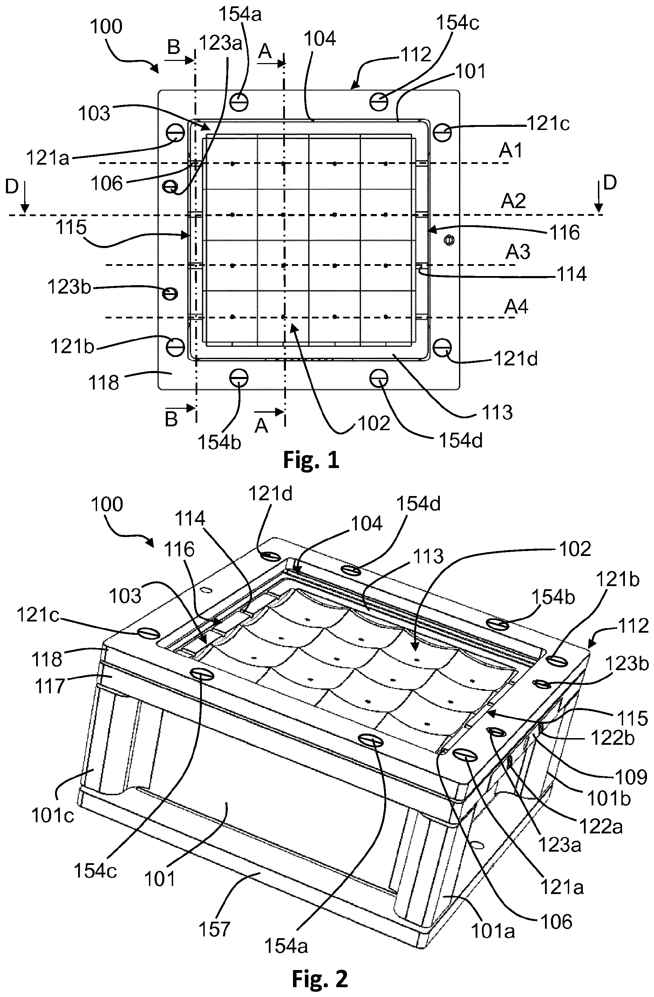

Comme illustré à titre d'exemple en figures 1 à 4, le dispositif de moulage 100 comporte un élément de moulage 101. Cet élément de moulage 101 comporte des cavités 102 formées dans une face 103 de l'élément de moulage 101. Chaque cavité 102 est destinée à participer à la formation d'une lentille correspondante. Sur l'exemple des figures 1 à 3, il est représenté seize cavités 102. Ce nombre de cavités 102 n'est pas limitatif et peut être adapté selon les besoins. Les cavités 102 sont préférentiellement agencées selon une matrice de plusieurs lignes de cavités 102 s'étendant chacune selon un axe A1, A2, A3, A4 correspondant (représentés en pointillés en figure 1). Les cavités 102 sont conformées selon les formes souhaitées des lentilles.

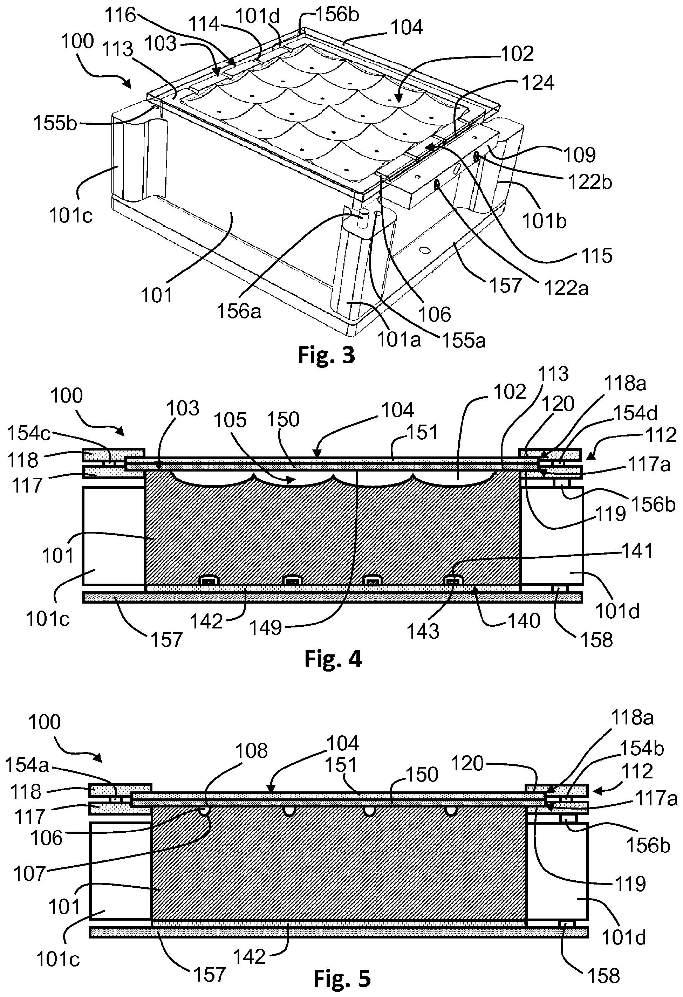

Le dispositif de moulage 100 comporte en outre la plaque transparente 104 (figures 1 à 4) maintenue par rapport à l'élément de moulage 101 de sorte à former, avec les cavités 102, l'empreinte 105 (figure 4) destinée à permettre la formation de la pluralité de lentilles. La plaque transparente 104 est dite « maintenue par rapport à l'élément de moulage 101 » car elle reste, au sein du dispositif de moulage 100, dans une position fixe relativement à l'élément de moulage 101 pour former l'empreinte 105. Notamment, la plaque transparente 104 et l'élément de moulage 101 sont sollicités l'un vers l'autre, ceci permettant d'assurer le maintien de la plaque transparente 104 par rapport à l'élément de moulage 101 tout en assurant une étanchéité adaptée de l'empreinte 105 en vue de la remplir avec du produit de moulage. De préférence, la plaque transparente 104 est en contact direct avec l'élément de moulage 101, notamment si les matériaux de la plaque transparente 104 et de l'élément de moulage 101 peuvent assurer l'étanchéité souhaitée, ceci étant par exemple le cas si la plaque transparente 104 est en verre, ou à base de verre, et si l'élément de moulage 101 est en aluminium. Alternativement (non représenté aux figures), il peut être interposé un joint d'étanchéité entre la plaque transparente 104 et l'élément de moulage 101, le joint d'étanchéité est alors comprimé entre la plaque transparente 104 et l'élément de moulage 101. De manière générale, la plaque transparente 104 est notamment maintenue de telle sorte que l'empreinte 105 formée permette que chaque cavité 102 soit en communication fluidique avec au moins une autre cavité adjacente, ceci permettant de remplir aisément l'empreinte 105 lorsque du produit de moulage est injecté dans l'empreinte 105. L'empreinte 105 présente un volume destiné à être rempli avec du produit de moulage pour former la pièce moulée dans l'empreinte 105.

Le dispositif de moulage 100 comporte en outre (figures 1 à 3 et 5) au moins un passage d'injection 106 destiné à permettre une introduction de produit de moulage dans l'empreinte 105. Ce passage d'injection 106 est ménagé, c'est-à-dire formé, entre la plaque transparente 104 et l'élément de moulage 101, ceci ayant pour avantage de favoriser le démoulage de la pièce moulée depuis l'élément de moulage 101 tout en permettant une réutilisation aisée de l'élément de moulage 101 en évitant que du produit de moulage solidifié reste bloqué dans l'élément de moulage 101. De préférence, ce passage d'injection 106 est délimité par la plaque transparente 104 et l'élément de moulage 101, ceci permettant de simplifier la structure du dispositif de moulage 100. Cette délimitation du passage d'injection 106 permet aussi, comme il l'est décrit ci-après, la formation du cordon de moulage collé à la plaque transparente 104 dont la rupture peut être maîtrisée. Le passage d'injection 106 peut être (figure 5), notamment en partie, délimité par une entaille 107 formée dans l'élément de moulage 101, et par une portion 108 de la plaque transparente 104. Autrement dit, le passage d'injection 106 peut être délimité par une surface dont une portion est issue de la plaque transparente 104 et dont une autre portion est formée par l'entaille 107. Le cas échéant, le passage d'injection 106 peut aussi être délimité en partie par le joint d'étanchéité décrit ci-dessus. Comme illustré en figures 1, 2, 3 et 5, le dispositif de moulage 100 peut comporter une pluralité de passages d'injection 106, par exemple au nombre de quatre, dont le but est de favoriser une répartition homogène du produit de moulage au sein de l'empreinte 105. Par exemple, le dispositif de moulage 100 comporte autant de passages d'injection 106 que l'élément de moulage 101 comporte de lignes de cavités 102, et chaque passage d'injection 106 débouche dans l'empreinte 105 à une extrémité d'une des lignes de cavités 102 correspondante. Par la suite, tout ce qui s'applique à un passage d'injection 106 peut s'appliquer à chacun des passages d'injection 106 lorsque le dispositif de moulage 100 en comporte plusieurs. Notamment, le, ou chaque, passage d'injection 106 forme un canal d'injection.

Comme illustré en figures 2 et 3, le dispositif de moulage 100 comporte l'injecteur 109 de produit de moulage. Cet injecteur 109 est agencé de sorte à permettre une introduction de produit de moulage dans le passage d'injection 106, cette introduction ayant pour but de remplir l'empreinte 105 avec du produit de moulage. Dans le cadre du dispositif de moulage 100, l'injecteur 109 est amovible, et le dispositif de moulage 100 est configuré de sorte à autoriser un retrait de l'injecteur 109 tout en conservant le maintien de la plaque transparente 104 par rapport à l'élément de moulage 101. Dans la présente description, le retrait de l'injecteur 109 correspond à son retrait par rapport au dispositif de moulage 100, notamment par rapport à son positionnement au sein du dispositif de moulage 100 vis-à-vis de l'élément de moulage 101 et de la plaque transparente 104. Ainsi, selon une autre formulation, le dispositif de moulage 100 peut adopter des première et deuxième configurations. Dans la première configuration, le dispositif de moulage 100 comporte l'injecteur 109, et dans la deuxième configuration le dispositif de moulage 100 est dépourvu de l'injecteur 109. Dès lors, dans les première et deuxième configurations, ainsi que lors du passage de la première configuration à la deuxième configuration (et inversement), la position relative entre la plaque transparente 104 et l'élément de moulage 101 reste la même. De préférence, l'injecteur 109 et l'élément de moulage 101 sont sollicités l'un vers l'autre, et la plaque transparente 104 et l'injecteur 109 sont sollicités l'un vers l'autre : ces sollicitations permettent notamment d'assurer une étanchéité d'un assemblage de l'injecteur 109 à l'élément de moulage 101, et d'un assemblage de l'injecteur 109 à la plaque transparente 104, cette étanchéité étant adaptée à l'introduction de produit de moulage dans le passage d'injection 106 par l'injecteur 109. Selon une autre formulation, l'injecteur 109 est serré à la fois contre l'élément de moulage 101, et à la fois contre la plaque transparente 104. En particulier, l'injecteur 109 est en contact direct avec la plaque transparente 104 et avec l'élément de moulage 101, l'étanchéité (entre l'injecteur 109, l'élément de moulage 101 et la plaque transparente 104) est alors satisfaisante notamment si l'injecteur 109 et l'élément de moulage 101 sont en aluminium et si la plaque transparente est en verre ou à base de verre. Alternativement, un joint d'étanchéité (non représenté aux figures) est interposé entre la plaque transparente 104 et l'injecteur 109, et/ou un joint d'étanchéité (non représenté aux figures) est interposé entre l'injecteur 109 et l'élément de moulage 101. Lorsque le dispositif de moulage 100 comporte une pluralité de passages d'injection 106, ces derniers forment chacun un canal d'injection reliant l'empreinte 105 à l'injecteur 109 en vue d'assurer une meilleure répartition de produit de moulage dans l'empreinte 105.

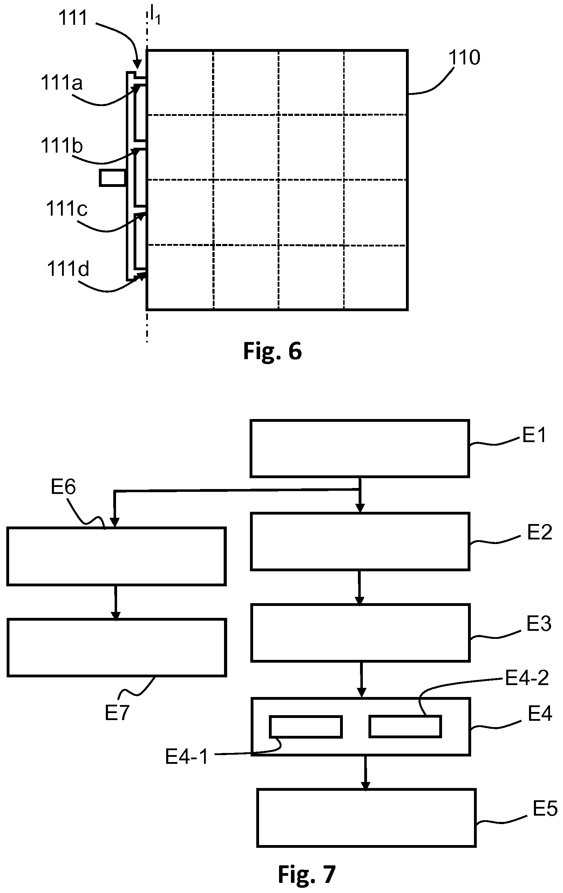

De manière générale, le fait que l'injecteur 109 puisse être retiré sans porter préjudice au positionnement relatif entre la plaque transparente 104 et l'élément de moulage 101 présente un avantage quant à l'intégrité de la pièce moulée, et notamment à l'intégrité de la liaison entre la pièce moulée et la plaque transparente 104 devant rester fixées l'une à l'autre au cours du démoulage de la pièce moulée depuis l'élément de moulage 101, et après le démoulage de la pièce moulée depuis l'élément de moulage 101. En effet, le moulage de la pluralité de lentilles à partir du dispositif de moulage 100 tel que décrit peut être mis en œuvre par injection d'un produit de moulage par l'injecteur 109 (l'injecteur 109 se remplit alors de produit de moulage) qui permet l'introduction du produit de moulage dans le passage d'injection 106 d'où il résulte ensuite le remplissage de l'empreinte 105 avec du produit de moulage. Une fois que l'empreinte 105 est remplie en produit de moulage, le produit de moulage est solidifié, par exemple par réticulation si le produit de moulage est du silicone (ou à base de silicone), pour former la pièce moulée comportant la pluralité de lentilles fixées à la plaque transparente 104. Selon une autre formulation, au terme de la solidification du produit de moulage dans l'empreinte 105, la pièce moulée est fixée à la plaque transparente 104. La figure 6 illustre schématiquement la pièce moulée 110 telle qu'elle se présente, avant son démoulage, dans le dispositif de moulage 100 tel qu'illustré en figures 1 à 4. Les pointillés inclus dans la pièce moulée 110 représentent les limites des lentilles de la pluralité de lentilles. Il résulte de la solidification du produit de moulage présent dans le dispositif de moulage 100 l'obtention d'un élément 111 en produit de moulage solidifié relié à la pièce moulée 110. En figure 6, la matière représentée en extension de la pièce moulée 110, à gauche de la ligne l₁, correspond à du produit de moulage solidifié dont la forme est conférée par un chemin de distribution du produit de moulage au sein de l'injecteur 109 et par le ou les passages d'injection 106. L'élément 111 en produit de moulage solidifié peut comporter un ou plusieurs cordons de moulage 111a, 111b, 111c, 111d. Le ou les cordons de moulage comportent chacun une partie située dans le passage d'injection 106 correspondant, et une autre partie située dans l'injecteur 109. Avantageusement, il résulte (lorsque le produit de moulage est solidifié dans le dispositif de moulage 100) du fait que le retrait de l'injecteur 109 se fasse sans préjudice à la position relative entre la plaque transparente 104 et l'élément de moulage 101, une rupture de l'élément 111 en produit de moulage solidifié, notamment une rupture d'un ou plusieurs cordons de moulage 111a, 111b, 111c, 111d de l'élément 111 en produit de moulage solidifié. Lorsque le passage d'injection 106 est délimité par l'élément de moulage 101 et la plaque transparente 104, cela permet que le cordon de moulage qui y sera formé soit collé à la plaque transparente 104 d'où il résulte que le retrait de l'injecteur 109 permet la rupture maîtrisée du cordon de moulage à la jonction entre l'injecteur 109, l'élément de moulage 101, et notamment la plaque transparente 104 : ceci permet d'éviter par la suite l'arrachement des lentilles de la pièce moulée 110 par rapport à la plaque transparente 104. Cette rupture de l'élément 111 en produit de moulage solidifié est réalisée tout en évitant/limitant la génération de contraintes entre la pièce moulée 110 et la plaque transparente 104 qui aurait pour conséquence de détériorer la liaison fixant la plaque transparente 104 à la pièce moulée 110. Autrement dit, cette rupture de l'élément 111 en produit de moulage solidifié est réalisée, lors du retrait de l'injecteur 109, alors que la pièce moulée 110 reste dans l'empreinte 105 et que la plaque transparente 104 reste maintenue par rapport à l'élément de moulage 101. Ainsi, la rupture de l'élément 111 en produit de moulage solidifié est notamment réalisée à l'endroit où l'injecteur 109 communique avec le passage d'injection 106.

On comprend de ce qui a été décrit ci-dessus que l'invention est aussi relative à un procédé de fabrication de lentilles tel qu'illustré schématiquement en figure 7. Le procédé de fabrication comprend une étape de fourniture E1 du dispositif de moulage 100, par exemple tel que décrit. Notamment, l'étape de fourniture E1 est telle que le dispositif de moulage 100 fourni comporte : l'élément de moulage 101 comportant les cavités 102 formées dans la face 103 de l'élément de moulage 101 ; la plaque transparente 104 maintenue par rapport à l'élément de moulage 101 de sorte à former, avec les cavités 102, l'empreinte 105 destinée à permettre la formation de la pluralité de lentilles ; ledit au moins un passage d'injection 106 destiné à permettre l'introduction de produit de moulage dans l'empreinte 105, le passage d'injection 106 étant ménagé, c'est-à-dire formé, entre la plaque transparente 104 et l'élément de moulage 101 ; l'injecteur 109 de produit de moulage agencé de sorte à permettre l'introduction de produit de moulage dans le passage d'injection 106 en vue de remplir l'empreinte 105 en produit de moulage. Le procédé de fabrication comporte en outre une étape d'injection E2 d'un produit de moulage à l'aide de l'injecteur 109 (c'est-à-dire en utilisant l'injecteur 109) d'où il résulte la présence du produit de moulage dans l'injecteur 109, dans le passage d'injection 106, et dans l'empreinte 105. Ainsi, lorsque l'empreinte 105 est remplie avec du produit de moulage, du produit de moulage est aussi présent dans l'injecteur 109 et dans le passage d'injection 106. L'injection à l'aide de l'injecteur 109 est notamment telle que l'étape d'injection E2 est mise en œuvre via l'injecteur 109 qui assure la répartition du produit de moulage au sein de l'empreinte 105. L'injecteur 109 peut notamment être relié à une réserve de produit de moulage via un distributeur de produit de moulage (non représenté) qui envoie le produit de moulage dans l'injecteur 109. Par ailleurs, le procédé de fabrication comporte une étape de solidification E3 (mise en œuvre après l'étape d'injection E2) du produit de moulage présent dans l'empreinte 105, dans le passage d'injection 106, et dans l'injecteur 109. Si le produit de moulage est du silicone, sa solidification peut être réalisée par sa réticulation. L'homme du métier est à même de mettre en œuvre l'étape de solidification E3 adaptée au produit de moulage utilisé, des exemples seront décrits par la suite. Le produit de moulage solidifié présent dans l'empreinte 105 forme la pièce moulée 110 comprenant la pluralité de lentilles, cette pièce moulée 110 étant fixée à la plaque transparente 104. Autrement dit, il résulte de la solidification du produit de moulage dans l'empreinte 105 la formation de la liaison entre la pièce moulée 110 et la plaque transparente 104, cette liaison rendant la pièce moulée 110 et la plaque transparente 104 solidaires l'une de l'autre. Ainsi, la solidification du produit de moulage présent dans l'empreinte 105 permet l'obtention de la pièce moulée 110 fixée à la plaque transparente 104. Le produit de moulage solidifié présent dans le, et le cas échéant chaque, passage d'injection 106 et dans l'injecteur 109 forme l'élément 111 en produit de moulage solidifié relié à la pièce moulée 110. Autrement dit, l'élément 111 en produit de moulage solidifié s'étend depuis la pièce moulée 110 jusque dans l'injecteur 109. Par ailleurs, le procédé de fabrication comporte une étape de retrait E4 de l'injecteur 109 mise en œuvre après l'étape de solidification E3 du produit de moulage. Cette étape de retrait E4 de l'injecteur 109 est réalisée alors que la plaque transparente 104 reste maintenue par rapport à l'élément de moulage 101 d'où il résulte une rupture de l'élément 111 en produit de moulage solidifié. Ainsi, l'étape de retrait E4 de l'injecteur 109 provoque la rupture de l'élément 111 en produit de moulage solidifié. Après l'étape de retrait E4 de l'injecteur 109, le procédé de fabrication peut comporter une étape de démoulage E5 de la pièce moulée 110 par écartement de la plaque transparente 104 par rapport à l'élément de moulage 101, la pièce moulée 110 restant fixée à la plaque transparente 104 au cours du démoulage de la pièce moulée 110 depuis l'élément de moulage 101 et consécutivement à son démoulage : ceci permettant de retirer la pièce moulée 110 sans l'endommager ou sans endommager sa liaison à la plaque transparente 104. On comprend que les étapes E1, E2, E3, E4, E5 sont notamment mises en œuvre successivement.

Comme évoqué précédemment, la plaque transparente 104 est destinée à rester fixée à la pièce moulée 110. Ainsi, la plaque transparente 104 est dite transparente à un rayonnement devant traverser les lentilles. Le rayonnement est ici défini comme un ensemble d'ondes électromagnétiques, notamment dont les longueurs d'onde sont comprises entre 300nm et 1800nm. Préférentiellement, la plaque transparente 104 est dite transparente lorsqu'elle permet une transmission de la lumière selon une transmission optique supérieure ou égale à 90% sur une plage comprise entre 300nm et 1800nm. Par exemple, cette plage comprise entre 300nm et 1800nm est adaptée si les lentilles sont destinées à focaliser de la lumière sur des cellules photovoltaïques multi-jonctions. Alternativement, si les cellules photovoltaïques où la lumière doit être focalisée sont à base de silicium, alors la plage associée à la transmission optique supérieure ou égale à 90% peut correspondre à la plage d'absorption de ces cellules photovoltaïques à base de silicium, cette plage d'absorption étant alors comprise entre 300nm et 1200nm. L'épaisseur de la plaque transparente 104 peut être choisie en fonction du matériau qui la compose en totalité ou au moins majoritairement, et en fonction du module d'Young dudit matériau afin que la plaque transparente 104 présente une rigidité adaptée aux exigences des contraintes optiques souhaitée. En particulier, la plaque transparente 104 peut être en verre ou à base de verre, en PMMA (sigle de poly(méthacrylate de méthyle) ou à base de PMMA, en PC (sigle de polycarbonate) ou à base de PC, en copolymère d'oléfine cyclique ou à base de copolymère d'oléfine cyclique. Bien entendu, d'autres matériaux peuvent rentrer dans la composition de la plaque transparente 104 du moment qu'ils permettent d'assurer la fonction recherchée de cette plaque transparente 104, à savoir d'autoriser le moulage de la pluralité de lentilles lorsque la plaque transparente 104 coopère avec l'élément de moulage 101, et de permettre à la plaque transparente 104 de rester fixée à la pluralité de lentilles après démoulage de la pièce moulée 110 depuis l'élément de moulage 101. Préférentiellement, la plaque transparente 104 est en verre ou à base de verre, notamment ce verre étant un verre trempé. Dans le cas de la plaque transparente 104, l'utilisation d'un injecteur 109 démontable est un réel atout permettant notamment d'éviter de percer la plaque transparente 104 pour injecter le produit de moulage dans l'empreinte. La plaque transparente 104 peut présenter une fonction de protection des lentilles de la pluralité de lentilles, c'est pourquoi elle reste fixée à ces lentilles.

Il résulte de ce qui a été décrit ci-dessus que le produit de moulage, une fois solidifié pour former la pièce moulée 110, est aussi transparent à la manière de ce qui a été décrit pour la plaque transparente 104. Le produit de moulage solidifié peut alors présenter les mêmes caractéristiques de transparence décrites pour la plaque transparente 104 vis-à-vis de la transmission de la lumière.

On comprend de ce qui a été décrit précédemment qu'il existe un besoin d'assurer un maintien adéquat de la plaque transparente 104 tant lors de l'introduction de produit de moulage dans l'empreinte 105 que lors du retrait de l'injecteur 109, le but étant que la position de la plaque transparente 104 par rapport à l'élément de moulage 101, lors du remplissage de l'empreinte 105 avec du produit de moulage, lors de la solidification du produit de moulage dans l'empreinte 105, et lors du retrait de l'injecteur 109 après solidification du produit de moulage présent dans le dispositif de moulage 100, reste toujours la même. Pour cela, le dispositif de moulage 100 peut comporter un organe d'assemblage 112 (figures 1, 2, 4 et 5), aussi appelé dispositif d'assemblage, fixant la position de la plaque transparente 104 par rapport à l'élément de moulage 101. En particulier, cet organe d'assemblage 112 sollicite la plaque transparente 104 vers une portée d'appui 113 périphérique discontinue de la face 103 de l'élément de moulage 101 dans laquelle sont formées les cavités 102. La portée d'appui périphérique 113 est dite « discontinue » car une ou plusieurs entailles 107, formées dans l'élément de moulage 101 (notamment dans sa face 103), participant à la formation du ou des passages d'injection 106 viennent l'interrompre localement, ainsi qu'une ou plusieurs fentes formées dans l'élément de moulage 101 permettant de former un ou plusieurs passages d'expulsion 114 du trop-plein de produit de moulage dans l'empreinte 105. Cette portée d'appui périphérique 113 peut être formée par un rebord périphérique dans lequel sont formées la ou les entailles, ainsi que la ou les fentes. La face 103 comporte ce rebord périphérique. Selon une autre formulation, la face 103 dans laquelle sont formées les cavités 102 comporte une pluralité de portions, incluses dans un même plan, ces portions étant destinées à servir d'appui par exemple pour la plaque transparente 104 qui est alors en contact avec ces portions. De préférence, la ou les entailles 107 destinées à former le ou les passages d'injection 106 sont situées à un premier bord 115 de l'élément de moulage 101 et les fentes sont situées à un deuxième bord 116 de l'élément de moulage 101 opposé au premier bord 115 (figures 1 à 3). Cet agencement particulier des entailles 107 et des fentes permettent d'assurer un remplissage de l'empreinte 105 adapté à la formation de lentilles. L'organe d'assemblage 112 peut être vu comme un ensemble de pièces coopérant entre elles pour assurer le maintien de la plaque transparente 104 par rapport à l'élément de moulage 101.

Selon un exemple préféré visible en figures 1, 2, 4 et 5, l'organe d'assemblage 112 comporte deux cadres 117, 118 entre lesquels la plaque transparente 104 est agencée. L'organe d'assemblage 112 comporte aussi au moins un premier organe de fixation 154a, 154b, 154c, 154d et au moins un deuxième organe de fixation 121a, 121b, 121c, 121d (figures 1, 2, 4 et 5). Les cadres 117, 118 sont assemblés l'un à l'autre par ledit au moins un premier organe de fixation 154a, 154b, 154c, 154d de sorte à enserrer la plaque transparente 104. Cet assemblage des deux cadres 117, 118 est notamment tel que les deux cadres 117, 118 ne sont pas en contact l'un avec l'autre pour assurer un serrage adéquat de la plaque transparente 104 entre eux, ce serrage adéquat permettant notamment de fixer la position de la plaque transparente 104 par rapport aux deux cadres 117, 118. Notamment, plusieurs premiers organes de fixation 154a, 154b, 154c, 154d permettent aux deux cadres 117, 118 d'enserrer la plaque transparente 104 pour une meilleure répartition des efforts appliqués par les cadres 117, 118 sur la plaque transparente 104. Ainsi, la plaque transparente 104 est encadrée et maintenue par rapport aux deux cadres 117, 118. Par ailleurs, l'assemblage des deux cadres 117, 118, réalisé par ledit au moins un premier organe de fixation 154a, 154b, 154c, 154d, enserrant la plaque transparente 104 est monté à l'élément de moulage 101 par ledit au moins un deuxième organe de fixation 121a, 121b, 121c, 121d d'où il résulte le maintien de la plaque transparente 104 par rapport à l'élément de moulage 101. Notamment, plusieurs deuxièmes organes de fixation 121a, 121b, 121c, 121d permettent de plaquer la plaque transparente 104 contre l'élément de moulage 101 pour améliorer l'étanchéité entre la plaque transparente 104 et la portée d'appui 113 de l'élément de moulage 101. En particulier, la plaque transparente 104 est disposée entre les deux cadres 117, 118 de sorte que les deux cadres 117, 118 longent, au moins en partie, des bords périphériques 119, 120 de deux faces opposées de la plaque transparente 104 (voir figures 4 et 5). Les deux cadres 117, 118 peuvent comporter chacun au moins un décrochement 117a, 118a formant un épaulement pour la plaque transparente 104 de sorte à assurer un maintien adéquat de la plaque transparente 104 entre les deux cadres 117, 118. Bien entendu, les décrochements 117a, 118a des deux cadres 117, 118 sont conformés en prenant en compte l'épaisseur de la plaque transparente 104 d'où il résulte que les deux cadres 117, 118 sont à distance l'un de l'autre lorsqu'ils enserrent la plaque transparente 104. En figures 1 et 2, le dispositif de moulage 100 comporte quatre premiers organes de fixation 154a, 154b, 154c, 154d et quatre deuxièmes organes de fixation 121a, 121b, 121c, 121d chacun formé par une vis. Chaque vis formant un premier organe de fixation 154a, 154b, 154c, 154d comporte une tête en appui contre le cadre 118 le plus éloigné de l'élément de moulage 101, et est vissée dans un trou taraudé formé dans le cadre 117 le plus proche de l'élément de moulage 101. Chaque vis formant un deuxième organe de fixation 121a, 121b, 121c, 121d correspondant comporte une tête en appui contre le cadre 118 le plus éloigné de l'élément de moulage 101, un corps traversant les deux cadres 117, 118 et vissé dans l'élément de moulage 101 (notamment dans un trou taraudé 155a, 155b correspondant formé dans l'élément de moulage 101 comme visible en figure 3). En particulier, les quatre deuxièmes organes de fixation 121a, 121b, 121c, 121d sont chacun vissé dans un pilier latéral correspondant 101a, 101b, 101c, 101d (figures 2, 3, 4 et 5) de l'élément de moulage 101. Les piliers latéraux 101a, 101b, 101c, 101d peuvent alors servir d'écrous pour solliciter l'ensemble comportant la plaque transparente 104 et les cadres 117, 118 vers l'élément de moulage 101. Ainsi, aucun des cadres 117, 118 n'est en contact avec les piliers latéraux 101a, 101b, 101c, 101d : ceci permet à la plaque transparente 104 d'être pressée, c'est-à-dire d'être mise en appui, contre la portée d'appui 113. Cet exemple est préféré car il est simple à réaliser, et est efficace pour le moulage de la pluralité de lentilles. De plus, l'utilisation de cadres 117, 118 pour le maintien de la plaque transparente 104 lors du moulage de la pluralité de lentilles permet d'utiliser une gamme d'épaisseur plus large de la plaque transparente 104 dans le sens où les cadres 117, 118 permettent de brider la plaque transparente 104 pour éviter sa déformation lors du moulage de la pluralité de lentilles dans l'empreinte 105.

Pour faciliter l'assemblage du dispositif de moulage 100, ce dernier peut comporter des détrompeurs 156a, 156b (figures 3 à 5), par exemple se présentant sous la forme d'ergots. Ces détrompeurs 156a, 156b peuvent être en saillie de l'élément de moulage 101, et sont destinés à pénétrer dans un trou correspondant formé dans le cadre 117 le plus proche de l'élément de moulage 101. Alternativement, les détrompeurs 156a, 156b peuvent être en saillie du cadre 117, et peuvent pénétrer dans un trou correspondant de l'élément de moulage 101. En plus de faciliter l'assemblage, de tels détrompeurs peuvent aussi participer à positionner de manière adéquat l'assemblage comportant les deux cadres 117, 118 et la plaque transparente 104 par rapport à l'élément de moulage 101 en vue de réaliser le moulage de la pluralité de lentilles.

Afin d'assurer le maintien de la plaque transparente 104 entre les deux cadres 117, 118, ces derniers peuvent comporter des joints en appui contre la plaque transparente 104. Alternativement, si les cadres 117, 118 sont en aluminium, la présence de ces joints n'est pas indispensable car des portées en aluminium, appartenant aux deux cadres 117, 118, alors mises en contact avec la plaque transparente 104 peuvent assurer un maintien adéquat de la plaque transparente 104 vis-à-vis des deux cadres 117, 118.

Comme illustré à titre d'exemple en figures 1 et 2, afin d'assurer une étanchéité convenable évitant les fuites du produit de moulage au niveau de l'injecteur 109, et plus particulièrement à la jonction entre la plaque transparente 104 et l'élément de moulage 101 où est monté l'injecteur 109, le dispositif de moulage 100 comporte au moins un premier élément de fixation 122a, 122b (aussi visible en figure 3) assurant un maintien de l'injecteur 109 par rapport à l'élément de moulage 101, et au moins un deuxième élément de fixation 123a, 123b configuré pour maintenir l'injecteur 109 par rapport à la plaque transparente 104. Autrement dit, le maintien de l'injecteur 109 par rapport à l'élément de moulage 101 est assuré par au moins un premier élément de fixation 122a, 122b, et le maintien de l'injecteur 109 par rapport à la plaque transparente 104 est assuré par au moins un deuxième élément de fixation 123a, 123b. Notamment, le dispositif de moulage 100 comporte des premiers éléments de fixation 122a, 122b (par exemple au nombre de deux comme illustré en figures 1 et 2) assurant le maintien de l'injecteur 109 par rapport à l'élément de moulage 101, et des deuxièmes éléments de fixations 123a, 123b (par exemple au nombre de deux comme illustré en figures 1 et 2) configurés pour maintenir l'injecteur 109 par rapport à la plaque transparente 104. En particulier, le ou les premiers éléments de fixation 122a, 122b permettent d'assurer la sollicitation évoquée précédemment entre l'élément de moulage 101 et l'injecteur 109. En particulier, le ou les deuxièmes éléments de fixation 123a, 123b permettent d'assurer la sollicitation évoquée précédemment entre la plaque transparente 104 et l'injecteur 109. Il en résulte que le ou les deuxièmes éléments de fixation 123a, 123b sont préférentiellement configurés pour maintenir l'injecteur 109 plaqué contre la plaque transparente 104.

Selon un exemple particulier, le ou chaque premier élément de fixation 122a, 122b est une vis traversant l'injecteur 109 et vissée dans l'élément de moulage 101. Plus particulièrement, le ou chaque premier élément de fixation 122a, 122b est une vis comportant une tête en appui contre l'injecteur 109, et comportant un corps traversant l'injecteur 109 et vissé dans l'élément de moulage 101. Par ailleurs, selon cet exemple particulier, le ou chaque deuxième élément de fixation 123a, 123b est une vis traversant les cadres 117, 118 et vissée dans l'injecteur 109. Plus particulièrement, le ou chaque deuxième élément de fixation 123a, 123b est une vis comportant une tête en appui contre le cadre 118 (notamment contre une face de ce cadre 118 orientée vers une direction opposée à l'élément de moulage 101), et comportant un corps traversant les cadres 117, 118 et vissé dans l'injecteur 109. Bien entendu, ici chaque vis peut être vissée dans un trou taraudé correspondant formé, le cas échéant, dans l'injecteur 109 ou dans l'élément de moulage 101. Il résulte de cet exemple particulier un maintien adapté de l'injecteur 109 assurant une injection convenable du produit de moulage depuis l'injecteur 109 dans ledit au moins un passage d'injection 106 en vue de remplir l'empreinte 105 en produit de moulage. Après solidification du produit de moulage, notamment après l'étape de solidification E3, il suffit de retirer le ou les premier(s) et deuxième(s) élément(s) de fixation 122a 122b, 123a, 123b, puis d'exercer un effort sur l'injecteur 109 pour casser l'élément 111 en produit de moulage solidifié, notamment à la jonction entre l'injecteur 109 et l'élément de moulage 101.

L'injecteur 109 peut comporter, comme illustré à titre d'exemple en figure 3 et 8 à 10, une rainure 124 fermée à ses extrémités longitudinales dites « extrémités longitudinales opposées ». Notamment, la rainure 124 comporte deux parois latérales 125, 126 reliées par un fond 127 de la rainure 124. Les deux parois latérales 125, 126 s'étendent entre les extrémités longitudinales opposées de la rainure 124. L'injecteur 109 comporte préférentiellement des encoches 128a, 128b, 128c, 128d, chaque encoche 128a, 128b, 128c, 128d étant agencée de sorte à mettre la rainure 124 en communication fluidique avec l'un des passages d'injection 106. Par communication fluidique, on entend qu'il est possible à un fluide, notamment le produit de moulage, de passer de la rainure 124 à chaque passage d'injection 106 par l'intermédiaire des encoches 128a, 128b, 128c, 128d. Ainsi, la rainure 124 permet la répartition du produit de moulage pour que ce dernier soit introduit dans les différentes encoches 128a, 128b, 128c, 128d, puis dans les passages d'injection 106 correspondants, puis dans l'empreinte 105. En particulier, les encoches 128a, 128b, 128c, 128d relient la paroi latérale 125 à une face de l'injecteur 109 orientée vers, et préférentiellement en contact avec, l'élément de moulage 101. De plus, les parois latérales 125, 126 de la rainure 124 sont reliées à des parties 129, 130 de l'injecteur 109 en contact avec la plaque transparente 104 (avec ou sans interposition de joints d'étanchéité) lorsque l'injecteur 109 est monté au sein du dispositif de moulage 100. Cette réalisation particulière de l'injecteur 109 permet de favoriser le retrait du produit de moulage s'étant solidifié dans l'injecteur 109, notamment après retrait de l'injecteur 109 par rapport au dispositif de moulage 100 en vue d'une réutilisation de l'injecteur 109 pour un futur moulage de lentilles. Par ailleurs, l'injecteur 109 peut comporter un orifice 131 reliant la rainure 124 à une face 132 de l'injecteur 109 opposée à l'élément de moulage 101 lorsque l'injecteur 109 fait partie du dispositif de moulage 100 (c'est-à-dire dans la première configuration évoquée précédemment). Cet orifice 131 peut présenter des dimensions telles que son nettoyage, alors qu'il contient du produit de moulage solidifié après retrait de l'injecteur 109 par rapport au dispositif de moulage 100, soit aisé, toujours dans le but de permettre la réutilisation de l'injecteur 109. Il résulte de ce qui a été décrit ci-dessus que la rainure 124 et les encoches 128a, 128b, 128c, 128d coopèrent avec la plaque transparente 104 pour former un corps creux, ou conduit, d'injection à section fermée : la cavité du corps creux est alors délimitée au moins en partie par l'injecteur 109 et par une partie d'une face correspondante de la plaque transparente 104. Bien entendu, le corps creux d'injection est un corps creux d'injection de produit de moulage. En particulier, avec un tel injecteur 109, il est formé, consécutivement à l'injection du produit de moulage, les cordons de moulage 111a, 111b, 111c, 111d en produit de moulage solidifié. Chaque cordon de moulage comporte, ou est formé, par une continuité de matière en produit de moulage solidifié présent dans un des passages d'injection 106 et dans une des encoches correspondante 128a, 128b, 128c, 128d. Il résulte du retrait de l'injecteur 109 une rupture de chacun des cordons de moulage à la jonction entre l'injecteur 109 et l'élément de moulage 101. Ainsi, le retrait de l'injecteur 109 permet la rupture maîtrisée du ou des cordons de moulage.

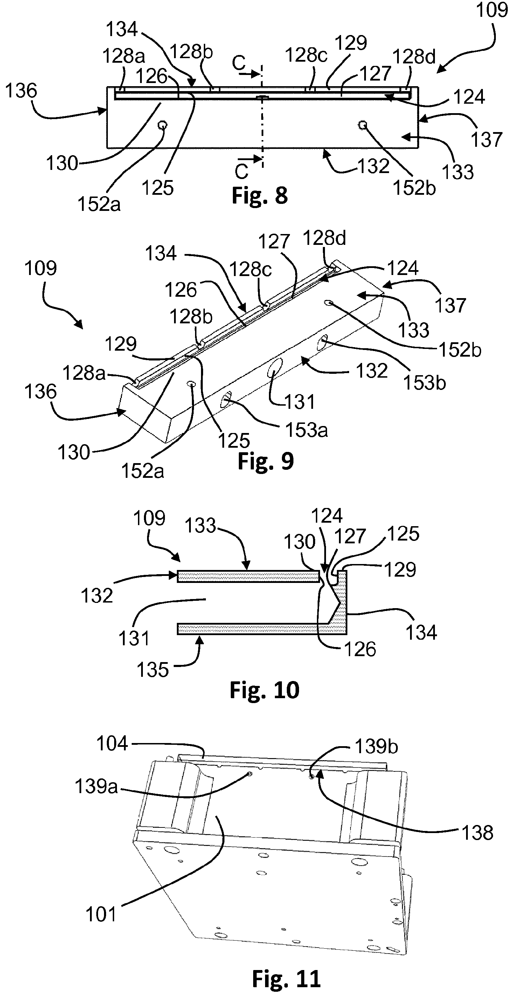

De préférence, l'injecteur 109 peut comporter des première, deuxième, troisième et quatrième faces respectivement référencées 133, 134, 135, 132 (figures 8 à 10), notamment toutes reliées par deux faces d'extrémité 136, 137 opposées. Dans le cadre du dispositif de moulage 100 comprenant l'injecteur 109, la première face 133 de l'injecteur 109 est orientée vers la plaque transparente 104, la deuxième face 134 est orientée vers l'élément de moulage 101, et la troisième face 135, opposée à la première face 133, est libre d'accès. En fait, la rainure 124 et les encoches 128a, 128b, 128c, 128d sont formées dans la première face 133. Notamment, les encoches relient la paroi 125 de la rainure 124 à la deuxième face 134. Par ailleurs, l'orifice 131 est formé dans la quatrième face 132 opposée à la deuxième face 134. Cet orifice 131 relie la quatrième face 132 à la rainure 124 pour permettre l'introduction de produit de moulage depuis l'orifice 131 dans la rainure 124. L'orifice 131 peut alors être relié au distributeur de produit de moulage (non représenté). Notamment, les trous taraudés 152a, 152b permettant le vissage des deuxièmes éléments de fixation 123a, 123b sont formés dans la première face 133 de l'injecteur 109 (figures 8 et 9). Par ailleurs, des trous débouchants 153a, 153b (figure 9), reliant la quatrième face 132 de l'injecteur 109 à la deuxième face 134 de l'injecteur 109, permettent le passage des premiers éléments de fixation 122a, 122b. Cette forme simple de l'injecteur 109 lui permet de facilement venir coopérer avec le reste du dispositif de moulage 100. On comprend alors que l'injecteur 109 peut adopter la forme générale d'un parallélépipède rectangle, aussi appelé pavé droit.

La figure 11 illustre une vue en perspective de la figure 3 pour laquelle l'injecteur 109 a été retiré afin de visualiser un décrochement 138 dont la présence préférentielle permet de faciliter le montage et le démontage de l'injecteur 109. Ici, l'élément de moulage 101 et la plaque transparente 104 forment le décrochement 138 où est agencé/monté l'injecteur 109 (notamment comme illustré en figures 2 et 3). Ainsi, ce décrochement 138 permet de former une région de montage de l'injecteur 109. L'injecteur 109 est monté, lorsqu'il maintenu par rapport à l'élément de moulage 101 et par rapport à la plaque transparente 104, dans la région de montage. Le décrochement 138 présente alors une fonction d'épaulement recevant l'injecteur 109 alors monté à la plaque transparente 104 (via les cadres 117, 118) et à l'élément de moulage 101. Le décrochement 138 est tout particulièrement adapté à la forme particulière de l'injecteur 109 des figures 8 à 10. La figure 11 permet aussi de visualiser deux trous 139a, 139b taraudés formés dans l'élément de moulage 101, et permettant le vissage de vis formant les premiers éléments de fixation 122a, 122b. Lorsque le cadre 117 est en place, il peut présenter une surface située dans le prolongement, ou la continuité, de la partie du décrochement 138 issue de la plaque transparente 104. Le cadre 117 peut alors venir lui aussi en contact avec l'injecteur 109 pour assurer le contact entre l'injecteur 109 et la plaque transparente. Alternativement, le cadre 117 n'a pas besoin d'être en contact avec l'injecteur 109 du moment que la plaque transparente 104 est en contact avec l'injecteur 109.

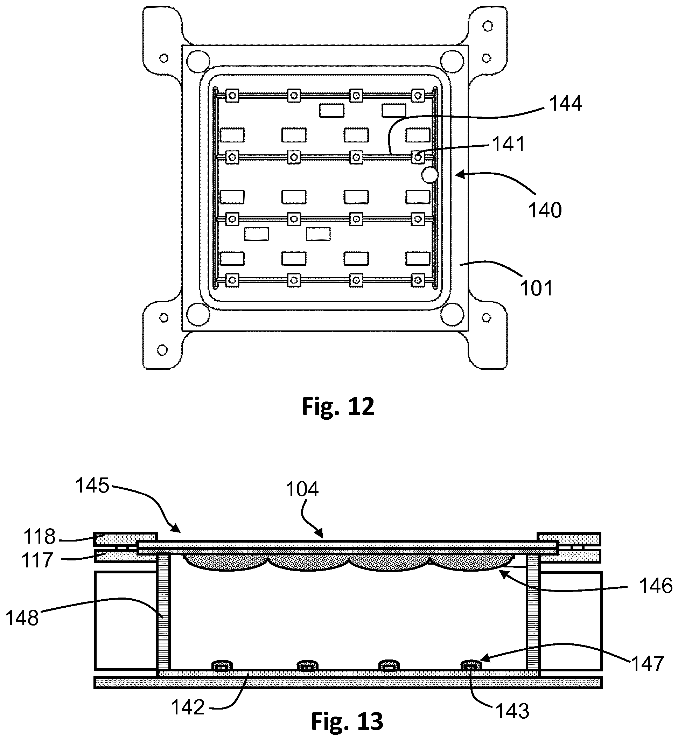

Selon une réalisation, le dispositif de moulage 100 est destiné à former par moulage des premières lentilles et des deuxièmes lentilles pour former une optique non-imageante (aussi appelée optique anidolique) pour composants optoélectroniques. Une optique non-imageante désigne des lentilles optiques destinées à la gestion d'un flux lumineux concentré ou diffusé. Dans la présente description, un composant optoélectronique peut, par exemple, être une cellule photovoltaïque, ou une diode électroluminescente. Dans le cas de composants optoélectroniques formés par des cellules photovoltaïques, l'optique non-imageante est un concentrateur optique. Dans le cas d'un concentrateur optique, les premières lentilles sont appelées lentilles primaires et les deuxièmes lentilles sont appelées lentilles secondaires. Dans le cas de composants optoélectroniques formés par des diodes électroluminescentes, l'optique non-imageante est un diffuseur optique. Dans le cas d'un diffuseur optique, les premières lentilles sont appelées lentilles secondaires et les deuxièmes lentilles sont appelées lentilles primaires. L'optique non-imageante est dite « à deux étages de lentilles ». En particulier, selon cette réalisation, les cavités 102 sont destinées à participer à la formation des premières lentilles de l'optique non-imageante. La face 103 de l'élément de moulage 101 dans laquelle sont formées ces cavités 102 est une première face 103 de l'élément de moulage 101. Par ailleurs, l'élément de moulage 101, comme visible en figures 4 et 12, comporte une deuxième face 140, opposée à la première face 103 de l'élément de moulage 101. L'élément de moulage 101 comporte des creux 141 formés dans sa deuxième face 140. Ces creux 141 sont destinés à participer à la formation des deuxièmes lentilles de l'optique non-imageante. Selon cette réalisation, le dispositif de moulage 100 comporte un substrat 142 (figure 4) sur lequel sont connectés les composants optoélectroniques 143, ledit substrat 142 étant monté à l'élément de moulage 101 de sorte que chaque composant optoélectronique 143 soit associé à un des creux 141, notamment de sorte que chaque deuxième lentille soit formée au contact de l'un des composants optoélectronique 143 du fait du remplissage des creux 141 par du produit de moulage. En figure 12, des canaux 144 sont formés dans la deuxième face 140 de l'élément de moulage 101 pour relier les différents creux 141, il suffit alors d'injecter du produit de moulage dans un ou plusieurs des canaux 144 pour remplir les différents creux 141. Notamment, l'injection pour remplir les creux 141 peut se faire au travers du substrat 142, le substrat 142 peut alors comporter un trou débouchant permettant cette fonction d'injection du produit de moulage pour remplir les creux 141. Ainsi, l'étape d'injection E2 peut permettre de former les premières lentilles, et le procédé de fabrication peut comporter (figure 7) une étape d'injection E6 de produit de moulage dans les creux 141 pour former les deuxièmes lentilles. L'étape d'injection E6 peut être suivie, après solidification du produit de moulage présent dans les creux 141, d'une étape de démoulage E7 des lentilles secondaires par écartement du substrat 142 par rapport à l'élément de moulage 101. La solidification du produit de moulage présent dans les creux 141 peut ici être mis en œuvre simultanément à, et de la même manière qu'au cours de, l'étape E3. L'élément de moulage 101 comporte notamment autant de creux 141 que de cavités 102, et chaque cavité 102 est formée à l'aplomb d'un creux 141 correspondant, ceci permettant de former des couples comportant chacun une des premières lentilles et une des deuxièmes lentilles, chaque couple devant coopérer avec un même rayonnement. Le substrat 142 peut être à base de FR4 (pour l'anglais « Flame Resistant 4 » et correspondant à un composite à base de résine époxy renforcé en fibre de verre) et peut former un PCB (pour l'anglais « Printed Circuit Board » ou circuit imprimé en français) comprenant des pistes de connexion à base de cuivre. D'autres types de substrat adaptés peuvent être utilisés, avec d'autres matériaux que le FR4 ou le cuivre. Par exemple, le substrat peut être de type SMI (pour « Substrat Métallique isolé ») ou de type DBC (pour l'anglais « Direct Bonded Copper »), ou peut comporter du verre ou de la céramique. La principale fonction du substrat 142 est de connecter électriquement les composants optoélectroniques. Par ailleurs, le substrat 142 peut aussi permettre l'évacuation du plus de chaleur possible : il agit alors comme un dissipateur thermique. La dissipation de chaleur est favorisée avec un substrat métallique ou céramique. Par ailleurs, le dispositif de moulage 100 peut comporter une plaque métallique 157 (figures 2 à 5) par exemple sur laquelle le substrat 142 est monté en utilisant des vis. Cette plaque métallique 157 peut aussi comporter des détrompeurs 158 (dont un est visible en figures 4 et 5), par exemple formés par des ergots, destinés à pénétrer dans des trous formés dans l'élément de moulage 101 et permettant un positionnement adéquat du substrat 142 par rapport à l'élément de moulage 101. Ce positionnement adéquat du substrat 142 par rapport à l'élément de moulage 101 permet notamment que chaque deuxième lentille soit formée au contact de l'un des composants optoélectroniques 143. Alternativement, c'est l'élément de moulage 101 qui peut comporter les détrompeurs permettant le montage de la plaque métallique 157 qui comporte alors des trous permettant l'insertion des détrompeurs. Par ailleurs, il peut être utilisé des vis vissées dans les piliers 101a, 101b, 101c, 101d pour fixer la plaque métallique 157 à l'élément de moulage 101, et donc assurer un maintien du substrat 142 par rapport à l'élément de moulage 101.

La figure 13 illustre un dispositif optoélectronique comprenant optique non-imageante 145 à deux étages de lentilles comportant un étage 146 de premières lentilles et un étage 147 de deuxièmes lentilles obtenus à partir du dispositif de moulage et/ou du procédé de fabrication. Lorsque l'optique non-imageante est un concentrateur optique à deux étages de lentilles, ce dispositif optoélectronique permet par exemple de concentrer le flux lumineux en entrée des premières lentilles sur la cellule photovoltaïque 143 correspondante du dispositif optoélectronique tout en augmentant la tolérance angulaire du dispositif optoélectronique final aux erreurs de pointage en direction du soleil. L'utilisation de deux étages de lentilles permet de tendre plus aisément vers la concentration maximale théorique de la lumière, cette concentration maximale étant donnée par le théorème de la conservation de l'étendu.

L'avantage de mouler les premières et deuxièmes lentilles à l'aide d'un même élément de moulage 101 est de permettre d'aligner les étages 146, 147 de premières et deuxièmes lentilles dès leur formation par moulage. L'alignement des étages 146 et 147 est notamment tel que des couples comprenant chacun une première lentille et une deuxième lentille alignées sont formés. Cet alignement des étages 146, 147, et donc des première et deuxième lentilles au sein d'un couple de première et deuxième lentilles, est défini par l'élément de moulage 101, notamment tout en positionnant de manière adéquat la plaque transparente 104 (à laquelle les premières lentilles sont fixées après solidification du produit de moulage) par rapport à l'élément de moulage 101, et le substrat 142 (auquel les deuxièmes lentilles sont fixés après solidification du produit de moulage) par rapport à l'élément de moulage 101, par exemple en utilisant les détrompeurs évoqués précédemment. Cet alignement peut être reproduit lors de la formation de l'optique non-imageante 145 du dispositif optoélectronique après démoulage des premières et deuxièmes lentilles. Cet optique non-imageante peut être formée grâce à un châssis 148 et à des détrompeurs (non représentés en figure 13) du dispositif optoélectronique permettant d'obtenir un positionnement des premières lentilles par rapport aux deuxièmes lentilles tel que celui obtenu au terme du moulage de ces premières et deuxièmes lentilles. Ceci peut être réalisé en repositionnant le substrat 142 et la plaque transparente 104 à l'aide des détrompeurs vis-à-vis du châssis 148 à la manière dont ils étaient positionnés vis-à-vis de l'élément de moulage 101. Ainsi, le positionnement de l'étage 146 de premières lentilles par rapport à l'étage 147 de deuxièmes lentilles obtenu lors du moulage peut être reproduit lors de l'assemblage final des premières lentilles avec les deuxièmes lentilles par le biais d'une entretoise formant notamment le châssis évoqué ci-dessus et présentant les mêmes dimensions que l'élément de moulage 101. L'assemblage final des premières et deuxièmes lentilles permet de former un système non-imageant dont la distance focale est assurée par le biais de l'entretoise. Notamment, après démoulage des étages 146, 147 de premières et deuxièmes lentilles, le dispositif optoélectronique peut être obtenu à la manière de ce qui est décrit dans le document « Micro-Concentrator with a Self-Assembly Process » de A. Ritou et al. publié dans AIP Conference Proceedings 1766, 080005-1 - 080005-6 (2016) et issu de « 12th International Conference on Concentrator Photovoltaïc Systems (CPV-12) ».

Le produit de moulage peut être du silicone bi-composants optique. L'utilisation d'un tel silicone est connue en soit par l'homme du métier, et n'est pas décrite plus en détails. Tout autre polymère adapté à la fonction recherchée de moulage de lentilles peut aussi être utilisé. De manière générale, si un silicone est utilisé en tant que produit de moulage, il présente un indice de réfraction correspondant à celui recherché pour les lentilles à obtenir par moulage. Le silicone bi-composants est alors injecté à l'état liquide dans l'empreinte 105, et le cas échéant dans les creux 141, avant d'être séché pour former au moins la pièce moulée 110 souhaitée. Le séchage, ou solidification, du produit de moulage dans l'empreinte 105 peut être réalisé à température ambiante, ou en four à une température adaptée pour accélérer la réticulation du silicone. Dans les deux cas de séchage évoqués, la géométrie de l'empreinte 105 prend en compte les déformations thermiques pour garantir la forme souhaitée des lentilles après démoulage, c'est-à-dire après retrait de la pièce moulée 110 par rapport à l'élément de moulage 101. Chacun des deux cas de séchage peut permettre de mettre en œuvre l'étape de solidification E3 décrite ci-avant.

Lorsque le produit de moulage est sec, le démoulage commence par le démontage de l'injecteur 109 provoquant ainsi la rupture de l'élément 111.

Le dispositif de moulage 100 tel que décrit peut être utilisé pour former tout type de lentilles, par exemple des lentilles de Fresnel, des lentilles en réflexion totale-interne pour concentrer de la lumière sur des cellules photovoltaïques, ou pour diffuser de la lumière émise par des diodes électroluminescentes.

Les deuxièmes lentilles telles que décrites peuvent être des lentilles SiLO correspondant à « SingLe Optical surface » en langue anglaise, des CPC (pour « Compound Parabolic Concentrator » en langue anglaise), des Fresnel Köhler, ou une sphère de Weierstrass. SiLO peut être généralisé par les termes « ovale cartésien » dont la lentille adopte une forme en sorte de dôme.

Notamment, au sein de l'élément de moulage 101, toutes les parties de ce dernier qui doivent recevoir du produit de moulage, en particulier au cours de l'étape d'injection E2, sont réalisées en dépouille : ceci permettant de faciliter ensuite le démoulage de la pièce moulée 110.

De préférence, le produit de moulage, une fois solidifié, est transparent sur la plage spectrale 300nm à 1800nm, et est résistant aux rayons ultraviolets concentrés. Ceci permet notamment une application dans le domaine du photovoltaïque.

De manière générale, quel que soit le produit de moulage utilisé, il présente préférentiellement une viscosité comprise entre 1 mPa.s et 6500 mPa.s au moment du remplissage de l'empreinte 105, ceci permettant de faciliter l'écoulement du produit de moulage lors de l'étape d'injection E2.

En particulier, la plaque transparente 104 peut avoir, avant son report sur l'élément de moulage 101, subi un traitement de sorte à favoriser l'accroche du produit de moulage, notamment lors de sa polymérisation si le produit de moulage comporte du polydiméthylsiloxane (PDMS). Ainsi, de manière générale, la plaque transparente 104 peut comporter une surface d'accroche 149 (figure 4) adaptée pour permettre l'adhésion du produit de moulage solidifié dans l'empreinte 105 à ladite plaque transparente 104. Cette surface d'accroche peut être obtenue par traitement plasma ou corona de la plaque transparente 104 : ces traitements permettent de nettoyer la surface de la plaque transparente 104 et de l'activer pour favoriser l'accroche du produit de moulage utilisé lors de sa solidification. Alternativement, la surface d'accroche peut être formée par un primaire d'adhésion 150 (figures 4 et 5) que comporte la plaque transparente 104. Ce primaire d'adhésion 150 est destiné à assurer (c'est-à-dire configuré pour permettre) l'adhésion du produit de moulage solidifié présent dans l'empreinte 105 à la plaque transparente 104. Ce primaire d'adhésion 150 peut être formé sur un support 151, par exemple, en verre ou en autre matériau à base duquel est formée la plaque transparente 104 et évoqué précédemment. Le primaire d'adhésion 150 peut être vu comme une couche formée sur le support 151, le support 151 et le primaire d'adhésion 150 peuvent alors former la plaque transparente 104. Le primaire d'adhésion 150 est un liquide qui en séchant forme la couche évoquée ci-dessus qui va garantir l'adhésion du produit de moulage au support 151. Un avantage de l'utilisation du primaire d'adhésion 150 est qu'il permet de s'affranchir de l'utilisation d'un agent démoulant à projeter en spray ou à couler dans les cavités 102 de l'élément de moulage 101. L'agent démoulant présente l'inconvénient de laisser des traces sur les optiques moulées, ceci pouvant les opacifier ou leur fait perdre leur pouvoir de transmission, c'est pour cela que l'on cherche à s'affranchir de l'agent démoulant. L'homme du métier est à même de choisir un produit de moulage adapté à la plaque transparente 104 à laquelle il doit s'accrocher, notamment en fonction du traitement de surface ou du primaire d'adhésion utilisé. Ainsi, de manière plus générale, la fixation de la pièce moulée 110 à la plaque transparente 104 peut être mise en œuvre par adhésion de la pièce moulée 110 à la plaque transparente 104. Le produit de moulage peut donc être configuré pour adhérer à la plaque transparente 104 lors de sa solidification.

Le cas échéant, un traitement de surface (notamment tel que décrit ci-dessus), ou un primaire d'adhésion (notamment tel que décrit ci-dessus), peut aussi être utilisé en combinaison avec le substrat 142 et les composants optoélectroniques 143 dans le but de faciliter le démoulage des deuxièmes lentilles.

De préférence, toutes les parties de l'élément de moulage 101 devant recevoir du produit de moulage sont formées en dépouille, ceci permettant, d'une part, de faciliter le démoulage des lentilles formées en produit de moulage, et, d'autre part, de faciliter la réutilisation de l'élément de moulage 101 car le produit de moulage solidifié ne se retrouvera pas coincé dans des renfoncements difficiles d'accès de l'élément de moulage 101. Par ailleurs, le même principe s'applique à l'injecteur 109 qui sera facilement nettoyable (même si la présence de l'orifice 131 peut poser problème, sa longueur est relativement courte ce qui facilitera le retrait de produit de moulage solidifié dans l'orifice 131).

Selon une réalisation, les parties de l'élément de moulage 101 devant recevoir du produit de moulage (par exemple les cavités, les creux, les passages) peuvent être recouvertes par un agent démoulant, ou présentent une surface formée par une couche antiadhésive dans le but de faciliter le démoulage ultérieur du produit de moulage solidifié. Cette couche antiadhésive peut être en nickel, en nitrure de bore et de nickel, en Polytetrafluoroethylene (PTFE), ou en perfluorodecyltrichlorosilane (FDTS). La couche antiadhésive est permanente car elle fait partie intégrante de l'élément de moulage 101.

De manière générale, l'étape de fourniture E1 peut être précédée d'un assemblage du dispositif de moulage 100 comprenant la fixation de la plaque transparente 104 à l'élément de moulage 101, notamment via l'organe d'assemblage 112, la fixation de l'injecteur 109 à la plaque transparente 104 et à l'élément de moulage 101 dans la région formant le décrochement 138. Le cas échéant, l'assemblage du dispositif de moulage 100 peut aussi comporter le montage du substrat 142, sur lequel sont connectés les composants optoélectroniques 143, à l'élément de moulage 101. Après injection du produit de moulage pour former la pluralité de lentilles et solidification du produit de moulage, la pièce moulée 110 peut être récupérée après avoir retiré l'injecteur 109. Le retrait de l'injecteur 109 peut être réalisé en retirant le ou les premiers éléments de fixation 122a, 122b, ainsi que le ou les deuxièmes éléments de fixation 123a, 123b, puis en exerçant un effort sur l'injecteur 109 pour casser l'élément 111 en produit de moulage solidifié d'où il résulte une désolidarisation de l'injecteur 109 par rapport à la pièce moulée 110. Ensuite, après retrait de l'injecteur 109, la pièce moulée 110 peut être démoulée par la mise en œuvre de l'étape d'écartement E5 évoquée ci-dessus, notamment après avoir retiré les deuxièmes organes de fixation 121a, 121b, 121c, 121d de l'organe d'assemblage 112. Le cas échéant, après injection du produit de moulage pour former les deuxièmes lentilles et solidification de ce produit de moulage, le substrat 142 sur lequel sont connectés les composants optoélectroniques 143 est écarté de l'élément de moulage 101 pour démouler les deuxièmes lentilles qui restent alors fixées aux composants optoélectroniques 143. Pour finir, en vue d'obtenir le résultat de la figure 13, il peut être formé un assemblage comportant le substrat 142 portant les composants optoélectroniques 143 sur lesquels sont formées les deuxièmes lentilles secondaires, et comportant la plaque transparente 104 à laquelle sont fixées les premières lentilles.

En particulier, l'élément de moulage 101 et l'injecteur 109 peuvent être en aluminium. L'aluminium peut être usiné de manière adaptée pour former l'élément de moulage 101 ou l'injecteur 109. L'usinage de l'aluminium permet, entre autres, d'obtenir des surfaces de rugosité adaptée à la formation de lentilles.

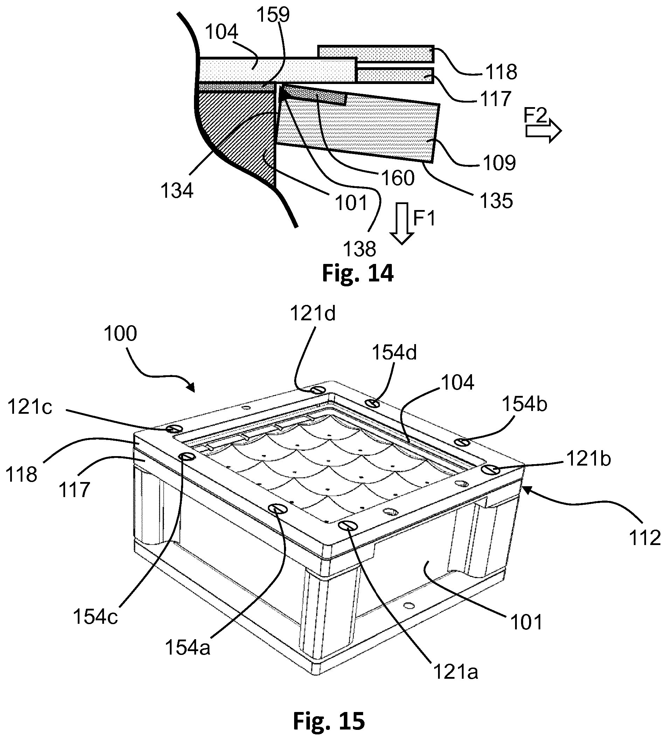

Pour faciliter la rupture de l'élément 111 en produit de moulage solidifié, l'étape de retrait E4 de l'injecteur 109 peut comporter (figure 7) une étape de déplacement E4-1 de l'injecteur 109 selon une direction opposée à l'élément de moulage 101, et notamment sensiblement parallèle à une face de la plaque transparente 104 orientée vers l'élément de moulage 101. Par ailleurs, l'étape de retrait E4 peut aussi comporter une étape d'inclinaison E4-2 de l'injecteur 109 par rapport à la face de la plaque transparente 104 orientée vers l'élément de moulage 101. De manière préférée, l'étape de déplacement E4-1 et l'étape d'inclinaison E4-2 sont réalisées au moins en partie simultanément, notamment du fait de la forme de parallélépipède droit de l'injecteur 109, par un effet de levier tendant à générer au sein de l'élément 111 en produit de moulage solidifié des contrainte entraînant la rupture de ce dernier. La figure 14 illustre schématiquement le retrait de l'injecteur 109 au niveau du décrochement 138 formé par la plaque transparente 104 et l'élément de moulage 101, les parties du dispositif de moulage inutiles à la compréhension du retrait de l'injecteur 109 ne sont pas représentées pour des raisons de clarté de la figure 14. Sur cette figure 14, l'inclinaison de l'injecteur 109 (étape E4-2) se fait selon la flèche F1, et le déplacement de l'étape E4-1 selon la flèche F2. En fait, l'inclinaison de l'injecteur 109 permet de mettre en œuvre l'effet de levier qui provoque le déplacement de l'étape E4-1. Cette figure 14 montre d'ailleurs deux parties 159, 160 de l'élément en produit de moulage solidifié suite à la rupture de ce dernier. Sur cette figure 14, la deuxième face 134 de l'injecteur 109 en contact avec l'élément de moulage 101 fait levier, à son angle avec la troisième face 135 de l'injecteur 109, contre l'élément de moulage 101 d'où il résulte un déplacement ayant des composantes selon les flèches F1 et F2 permettant la rupture maitrisée de l'élément 111 en produit de moulage solidifié. Par ailleurs, la figure 15 représente le dispositif de moulage 100 après retrait de l'injecteur 109, mais avant démoulage de la pièce moulée, et pour lequel la plaque transparente 104 est plaquée contre l'élément de moulage 101 grâce à l'organe d'assemblage 112 comprenant les deux cadres 117, 118 (aussi visibles en figure 14) et les premiers et deuxièmes organes de fixation 154a, 154b, 154c, 154d, 121a, 121b, 121c, 121d.

Dans la présente description, tout ce qui s'applique au dispositif de moulage 100 peut s'appliquer au procédé de fabrication, et inversement tout ce qui s'applique au procédé de fabrication peut s'appliquer au dispositif de moulage 100.

Le dispositif de moulage et le procédé de fabrication de lentilles associé présente une application industrielle dans la fabrication de lentilles, et plus particulièrement dans le cadre de la fabrication d'optiques non-imageantes.

## Revendications

1. Dispositif de moulage (100) pour former des lentilles par moulage, ledit dispositif de moulage (100) comportant :
- un élément de moulage (101) comportant des cavités (102) formées dans une face (103) de l'élément de moulage (101),
- une plaque transparente (104) maintenue par rapport à l'élément de moulage (101) de sorte à former, avec les cavités (102), une empreinte (105) destinée à permettre la formation d'une pluralité de lentilles,
- au moins un passage d'injection (106) destiné à permettre une introduction de produit de moulage dans l'empreinte (105), le passage d'injection (106) étant ménagé entre la plaque transparente (104) et l'élément de moulage (101),
- un injecteur (109) de produit de moulage agencé de sorte à permettre une introduction de produit de moulage dans le passage d'injection (106),
- **caractérisé en ce que** l'injecteur (109) est amovible par rapport à l'élément de moulage (101), et **en ce que**
- ledit dispositif de moulage (100) est configuré de sorte à autoriser un retrait de l'injecteur (109) tout en conservant le maintien de la plaque transparente (104) par rapport à l'élément de moulage (101),
- ledit au moins un passage d'injection est délimité par l'élément de moulage (101) et la plaque transparente (104).

2. Dispositif de moulage (100) selon la revendication 1, **caractérisé en ce qu'**il comporte un organe d'assemblage (112) fixant la position de plaque transparente (104) par rapport à l'élément de moulage (101).

3. Dispositif de moulage (100) selon la revendication précédente, **caractérisé en ce que** l'organe d'assemblage (112) sollicite la plaque transparente (104) vers une portée d'appui (113) périphérique discontinue de la face (103) de l'élément de moulage (101) dans laquelle sont formées les cavités (102).

4. Dispositif de moulage (100) selon l'une quelconque des revendications 2 à 3, **caractérisé en ce que** l'organe d'assemblage (112) comporte :
- au moins un premier organe de fixation (154a, 154b, 154c, 154d),
- au moins un deuxième organe de fixation (121a, 121b, 121c, 121d),
- deux cadres (117, 118) entre lesquels la plaque transparente (104) est agencée, lesdits cadres (117, 118) étant assemblés l'un à l'autre par ledit au moins un premier organe de fixation (154a, 154b, 154c, 154d) de sorte à enserrer la plaque transparente (104), et l'assemblage des deux cadres (117, 118) enserrant la plaque transparente (104) étant monté à l'élément de moulage (101) par ledit au moins un deuxième organe de fixation (121a, 121b, 121c, 121d).

5. Dispositif de moulage (100) selon l'une quelconque des revendications précédentes, **caractérisé en ce qu'**il comporte au moins un premier élément de fixation (122a, 122b) assurant un maintien de l'injecteur (109) par rapport à l'élément de moulage (101), et au moins un deuxième élément de fixation (123a, 123b) configuré pour maintenir l'injecteur (109) par rapport à la plaque transparente (104).

6. Dispositif de moulage (100) selon la revendication précédente et la revendication 4, **caractérisé en ce que** le premier élément de fixation (122a, 122b) est une vis traversant l'injecteur (109) et vissée dans l'élément de moulage (101), et **en ce que** le deuxième élément de fixation (123a, 123b) est une vis traversant les cadres (117, 118) et vissée dans l'injecteur (109).

7. Dispositif de moulage (100) selon l'une quelconque des revendications précédentes, **caractérisé en ce qu'**il comporte une pluralité de passages d'injection (106) formant chacun un canal d'injection reliant l'empreinte (105) à l'injecteur (109).

8. Dispositif de moulage (100) selon la revendication précédente, **caractérisé en ce que** l'injecteur (109) comporte :
- une rainure (124) fermée à ses extrémités longitudinales, et
- des encoches (128a, 128b, 128c, 128d), chaque encoche (128a, 128b, 128c, 128d) étant agencée de sorte à mettre la rainure (124) en communication fluidique avec l'un des passages d'injection (106).

9. Dispositif de moulage (100) selon la revendication précédente, **caractérisé en ce que** la rainure (124) et les encoches (128a, 128b, 128c, 128d) coopèrent avec la plaque transparente (104) pour former un corps creux d'injection à section fermée.

10. Dispositif de moulage (100) selon l'une quelconque des revendications précédentes, **caractérisé en ce que** la plaque transparente (104) et l'élément de moulage (101) forment un décrochement (138) où est agencé l'injecteur (109).

11. Dispositif de moulage (100) selon l'une quelconque des revendications précédentes, **caractérisé en ce que** :
- les cavités (102) sont destinées à participer à la formation de premières lentilles d'une optique non-imageante, et la face (103) de l'élément de moulage (101) dans laquelle sont formées les cavités (102) est une première face de l'élément de moulage (101),
- l'élément de moulage (101) comporte une deuxième face (140) opposée à sa première face (103),
- l'élément de moulage (101) comporte des creux (141) formés dans sa deuxième face (140), les creux (141) étant destinés à participer à la formation de deuxièmes lentilles de l'optique non-imageante,
- ledit dispositif de moulage (100) comporte un substrat (142) sur lequel sont connectés des composants optoélectroniques (143), ledit substrat (142) étant monté à l'élément de moulage (101) de sorte que chaque composant optoélectronique (143) soit associé à un des creux (141).

12. Dispositif (100) selon l'une quelconque des revendications précédentes, **caractérisé en ce que** la plaque transparente (104) comporte un primaire d'adhésion (150) configuré pour permettre l'adhésion d'un produit de moulage solidifié présent dans l'empreinte (105) à ladite plaque transparente (104).

13. Procédé de fabrication de lentilles, **caractérisé en ce qu'**il comporte les étapes suivantes :
- une étape de fourniture (E1) d'un dispositif de moulage (100) pour former des lentilles par moulage, ledit dispositif de moulage (100) comportant :
∘ un élément de moulage (101) comportant des cavités (102) formées dans une face (103) de l'élément de moulage (101),
∘ une plaque transparente (104) maintenue par rapport à l'élément de moulage (101) de sorte à former, avec les cavités (102), une empreinte (105) destinée à permettre la formation d'une pluralité de lentilles,
∘ au moins un passage d'injection (106) destiné à permettre une introduction de produit de moulage dans l'empreinte (105), le passage d'injection (106) étant délimité par la plaque transparente (104) et l'élément de moulage (101),
∘ un injecteur (109) de produit de moulage agencé de sorte à permettre une introduction de produit de moulage dans le passage d'injection (106),
- une étape d'injection (E2) d'un produit de moulage à l'aide de l'injecteur (109) d'où il résulte la présence du produit de moulage dans l'injecteur (109), dans le passage d'injection (106), et dans l'empreinte (105),
- une étape de solidification (E3) du produit de moulage présent dans l'empreinte (105), dans le passage d'injection (106), et dans l'injecteur (109), le produit de moulage solidifié présent dans l'empreinte (105) formant une pièce moulée (110) comprenant la pluralité de lentilles, la pièce moulée (110) étant fixée à la plaque transparente (104), le produit de moulage solidifié présent dans le passage d'injection (106) et dans l'injecteur (109) formant un élément (111) en produit de moulage solidifié relié à la pièce moulée (110),
- une étape de retrait (E4) de l'injecteur (109) mise en œuvre après l'étape de solidification (E3), l'étape de retrait (E4) étant réalisée alors que la plaque transparente (104) reste maintenue par rapport à l'élément de moulage (101), et l'étape de retrait (E4) de l'injecteur (109) provoquant une rupture de l'élément (111) en produit de moulage solidifié.

14. Procédé de fabrication selon la revendication précédente, **caractérisé en ce que** l'étape de retrait (E4) de l'injecteur (109) comporte une étape de déplacement (E4-1) de l'injecteur (109) selon une direction opposée à l'élément de moulage (101), et une étape d'inclinaison (E4-2) de l'injecteur (109) par rapport à la face de la plaque transparente (104) orientée vers l'élément de moulage (101).

15. Procédé de fabrication selon l'une quelconque des revendications 13 à 14, **caractérisé en ce qu'**il comporte, après l'étape de retrait (E4) de l'injecteur (109), une étape de démoulage (E5) de la pièce moulée (110) par écartement de la plaque transparente (104) par rapport à l'élément de moulage (101).

## Patentansprüche

1. Formvorrichtung (100) zum Ausbilden von Linsen durch Formen, wobei die Formvorrichtung (100) aufweist:
- ein Formelement (101), das Vertiefungen (102) aufweist, die in einer Seite (103) des Formelements (101) ausgebildet sind,
- eine durchsichtige Platte (104), die bezüglich des Formelements (101) so gehalten wird, dass sie mit den Vertiefungen (102) einen Formhohlraum (105) bildet, der dazu bestimmt ist, die Ausbildung mehrerer Linsen zu ermöglichen,
- mindestens einen Einspritzdurchgang (106), der dazu bestimmt ist, eine Einleitung von Formmasse in den Formhohlraum (105) zu ermöglichen, wobei der Einspritzdurchgang (106) zwischen der durchsichtigen Platte (104) und dem Formelement (101) ausgebildet ist,
- einen Injektor (109) für Formmasse, der dazu eingerichtet ist, eine Einleitung von Formmasse in den Einspritzdurchgang (106) zu ermöglichen,
- **dadurch gekennzeichnet, dass** der Injektor (109) bezüglich des Formelements (101) lösbar ist, und dadurch, dass
- die Formvorrichtung (100) so ausgebildet ist, dass sie ein Entfernen des Injektors (109) unter Beibehaltung des Haltens der durchsichtigen Platte (104) bezüglich des Formelements (101) ermöglicht,
- der mindestens eine Einspritzdurchgang von dem Formelement (101) und der durchsichtigen Platte (104) begrenzt wird.

2. Formvorrichtung (100) nach Anspruch 1, **dadurch gekennzeichnet, dass** sie ein Montageorgan (112) aufweist, das die Position der durchsichtigen Platte (104) bezüglich des Formelements (101) fixiert.

3. Formvorrichtung (100) nach dem vorhergehenden Anspruch, **dadurch gekennzeichnet, dass** das Montageorgan (112) die durchsichtige Platte (104) zu einem umlaufenden Stützlager (113) hin beaufschlagt, das nicht mit der Seite (103) des Formelements (101) verbunden ist, in der die Vertiefungen (102) ausgebildet sind.

4. Formvorrichtung (100) nach einem der Ansprüche 2 bis 3, **dadurch gekennzeichnet, dass** das Montageorgan (112) aufweist:
- mindestens ein erstes Befestigungsorgan (154a, 154b, 154c, 154d),
- mindestens ein zweites Befestigungsorgan (121a, 121b, 121c, 121d),
- zwei Rahmen (117, 118), zwischen denen die durchsichtige Platte (104) angeordnet ist, wobei die Rahmen (117, 118) durch das mindestens eine Befestigungsorgan (154a, 154b, 154c, 154d) so zusammengebaut sind, dass sie die durchsichtige Platte (104) einspannen, und wobei der die durchsichtige Platte (104) einspannende Zusammenbau der zwei Rahmen (117, 118) durch das mindestens eine zweite Befestigungsorgan (121a, 121b, 121c, 121d) an dem Formelement (101) angebracht ist.

5. Formvorrichtung (100) nach einem der vorhergehenden Ansprüche, **dadurch gekennzeichnet, dass** sie mindestens ein erstes Befestigungselement (122a, 122b) aufweist, das ein Halten des Injektors (109) bezüglich des Formelements (101) sicherstellt, und mindestens ein zweites Befestigungselement (123a, 123b), das dafür ausgelegt ist, den Injektor (109) bezüglich der durchsichtigen Platte (104) zu halten.

6. Formvorrichtung (100) nach dem vorhergehenden Anspruch und Anspruch 4, **dadurch gekennzeichnet, dass** das erste Befestigungselement (122a, 122b) eine Schraube ist, welche den Injektor (109) durchquert und in das Formelement (101) eingeschraubt ist, und dadurch, dass das zweite Befestigungselement (123a, 123b) eine Schraube ist, welche die Rahmen (117, 118) durchquert und in den Injektor (109) eingeschraubt ist.

7. Formvorrichtung (100) nach einem der vorhergehenden Ansprüche, **dadurch gekennzeichnet, dass** sie mehrere Einspritzdurchgänge (106) aufweist, die jeweils einen Einspritzkanal bilden, der den Formhohlraum (105) mit dem Injektor (109) verbindet.

8. Formvorrichtung (100) nach dem vorhergehenden Anspruch, **dadurch gekennzeichnet, dass** der Injektor (109) aufweist:
- eine Rille (124), die an ihren Längsenden geschlossen ist, und
- Aussparungen (128a, 128b, 128c, 128d), wobei jede Aussparung (128a, 128b, 128c, 128d) dazu eingerichtet ist, die Rille (124) in Fluidverbindung mit einem der Einspritzdurchgänge (106) zu bringen.

9. Formvorrichtung (100) nach dem vorhergehenden Anspruch, **dadurch gekennzeichnet, dass** die Rille (124) und die Aussparungen (128a, 128b, 128c, 128d) mit der durchsichtigen Platte (104) zusammenwirken, um einen Einspritzhohlkörper mit geschlossenem Querschnitt zu bilden.

10. Formvorrichtung (100) nach einem der vorhergehenden Ansprüche, **dadurch gekennzeichnet, dass** die durchsichtige Platte (104) und das Formelement (101) einen Absatz (138) bilden, wo der Injektor (109) angeordnet ist.

11. Formvorrichtung (100) nach einem der vorhergehenden Ansprüche, **dadurch gekennzeichnet, dass**:
- die Vertiefungen (102) dazu bestimmt sind, an der Ausbildung von ersten Linsen einer nicht bildgebenden Optik teilzunehmen, und die Seite (103) des Formelements (101), in der die Vertiefungen (102) ausgebildet sind, eine erste Seite des Formelements (101) ist,
- das Formelement (101) eine zweite Seite (140) aufweist, die seiner ersten Seite (103) gegenüberliegt,
- das Formelement (101) Ausnehmungen (141) aufweist, die in seiner zweiten Seite (140) ausgebildet sind, wobei die Ausnehmungen (141) dazu bestimmt sind, an der Ausbildung von zweiten Linsen der nicht bildgebenden Optik teilzunehmen,
- die Formvorrichtung (100) ein Substrat (142) aufweist, auf dem optoelektronische Komponenten (143) angeschlossen sind, wobei das Substrat (142) an dem Formelement (101) so angebracht ist, dass jede optoelektronische Komponente (143) einer der Ausnehmungen (141) zugeordnet ist.

12. Vorrichtung (100) nach einem der vorhergehenden Ansprüche, **dadurch gekennzeichnet, dass** die durchsichtige Platte (104) einen Haftprimer (150) aufweist, der dafür ausgelegt ist, die Haftung einer verfestigten Formmasse, die im Formhohlraum (105) vorhanden ist, an der durchsichtigen Platte (104) zu ermöglichen.

13. Verfahren zur Herstellung von Linsen, **dadurch gekennzeichnet, dass** es die folgenden Schritte umfasst:
- einen Schritt der Bereitstellung (E1) einer Formvorrichtung (100) zum Ausbilden von Linsen durch Formen, wobei die Formvorrichtung (100) aufweist:
∘ ein Formelement (101), das Vertiefungen (102) aufweist, die in einer Seite (103) des Formelements (101) ausgebildet sind,
∘ eine durchsichtige Platte (104), die bezüglich des Formelements (101) so gehalten wird, dass sie mit den Vertiefungen (102) einen Formhohlraum (105) bildet, der dazu bestimmt ist, die Ausbildung mehrerer Linsen zu ermöglichen,
∘ mindestens einen Einspritzdurchgang (106), der dazu bestimmt ist, eine Einleitung von Formmasse in den Formhohlraum (105) zu ermöglichen, wobei der Einspritzdurchgang (106) von der durchsichtigen Platte (104) und dem Formelement (101) begrenzt wird,
∘ einen Injektor (109) für Formmasse, der dazu eingerichtet ist, eine Einleitung von Formmasse in den Einspritzdurchgang (106) zu ermöglichen,
- einen Schritt der Einspritzung (E2) einer Formmasse mithilfe des Injektors (109), woraus das Vorhandensein der Formmasse im Injektor (109), im Einspritzdurchgang (106) und im Formhohlraum (105) resultiert,
- einen Schritt der Verfestigung (E3) der Formmasse, die im Formhohlraum (105), im Einspritzdurchgang (106) und im Injektor (109) vorhanden ist, wobei die verfestigte Formmasse, die im Formhohlraum (105) vorhanden ist, ein Formteil (110) bildet, das die mehreren Linsen umfasst, wobei das Formteil (110) an der durchsichtige Platten (104) befestigt ist, wobei die verfestigte Formmasse, die im Einspritzdurchgang (106) und im Injektor (109) vorhanden ist, ein Element (111) aus verfestigter Formmasse bildet, das mit dem Formteil (110) verbunden ist,
- einen Schritt des Entfernens (E4) des Injektors (109), der nach dem Schritt der Verfestigung (E3) durchgeführt wird, wobei der Schritt des Entfernens (E4) durchgeführt wird, während die durchsichtige Platte (104) weiterhin bezüglich des Formelements (101) gehalten wird, und der Schritt des Entfernens (E4) des Injektors (109) einen Bruch des Elements (111) aus verfestigter Formmasse zur Folge hat.

14. Verfahren zur Herstellung nach dem vorhergehenden Anspruch, **dadurch gekennzeichnet, dass** der Schritt des Entfernens (E4) des Injektors (109) einen Schritt der Verlagerung (E4-1) des Injektors (109) in einer zum Formelement (101) entgegengesetzten Richtung und einen Schritt der Neigung (E4-2) des Injektors (109) bezüglich der Seite der durchsichtigen Platte (104), die dem Formelement (101) zugewandt ist, umfasst.

15. Verfahren zur Herstellung nach einem der Ansprüche 13 bis 14, **dadurch gekennzeichnet, dass** es nach dem Schritt des Entfernens (E4) des Injektors (109) einen Schritt des Ausformens (E5) des Formteils (110) durch Trennen der durchsichtigen Platte (104) von dem Formelement (101) umfasst.

## Claims

1. Moulding device (100) for forming lenses by moulding, said moulding device (100) comprising:
- a moulding element (101) comprising indentations (102) formed in a face (103) of the moulding element (101),
- a transparent plate (104) held with respect to the moulding element (101) so as to form, with the indentations (102), a cavity (105) intended to allow the formation of a plurality of lenses,
- at least one injection passage (106) intended to allow moulding product to be introduced into the cavity (105), the injection passage (106) being arranged between the transparent plate (104) and the moulding element (101),
- a moulding product injector (109) arranged so as to allow moulding product to be introduced into the injection passage (106),
- **characterized in that** the injector (109) is removable with respect to the moulding element (101), and **in that**
- said moulding device (100) is configured so as to allow the injector (109) to be removed while at the same time keeping the transparent plate (104) held with respect to the moulding element (101),
- said at least one injection passage is delimited by the moulding element (101) and the transparent plate (104).

2. Moulding device (100) according to Claim 1, **characterized in that** it comprises an assembly member (112) fixing the position of the transparent plate (104) with respect to the moulding element (101).

3. Moulding device (100) according to the preceding claim, **characterized in that** the assembly member (112) urges the transparent plate (104) towards a discontinuous peripheral bearing surface (113) of the face (103) of the moulding element (101) in which the indentations (102) are formed.

4. Moulding device (100) according to either one of Claims 2 and 3, **characterized in that** the assembly member (112) comprises:
- at least one first fixing member (154a, 154b, 154c, 154d),
- at least one second fixing member (121a, 121b, 121c, 121d),
- two frames (117, 118) between which the transparent plate (104) is arranged, said frames (117, 118) being assembled with one another by said at least one first fixing member (154a, 154b, 154c, 154d) so as to clamp the transparent plate (104), and the assembly of the two frames (117, 118) clamping the transparent plate (104) being mounted to the moulding element (101) by said at least one second fixing member (121a, 121b, 121c, 121d).

5. Moulding device (100) according to any one of the preceding claims, **characterized in that** it comprises at least one first fixing element (122a, 122b) that holds the injector (109) with respect to the moulding element (101), and at least one second fixing element (123a, 123b) configured to hold the injector (109) with respect to the transparent plate (104).

6. Moulding device (100) according to the preceding claim and Claim 4, **characterized in that** the first fixing element (122a, 122b) is a screw passing through the injector (109) and screwed into the moulding element (101), and **in that** the second fixing element (123a, 123b) is a screw passing through the frames (117, 118) and screwed into the injector (109).

7. Moulding device (100) according to any one of the preceding claims, **characterized in that** it comprises a plurality of injection passages (106) each forming an injection channel connecting the cavity (105) to the injector (109).

8. Moulding device (100) according to the preceding claim, **characterized in that** the injector (109) comprises:
- a groove (124) closed at its longitudinal ends, and
- notches (128a, 128b, 128c, 128d), each notch (128a, 128b, 128c, 128d) being arranged so as to place the groove (124) in fluidic communication with one of the injection passages (106).

9. Moulding device (100) according to the preceding claim, **characterized in that** the groove (124) and the notches (128a, 128b, 128c, 128d) cooperate with the transparent plate (104) to form a closed section hollow injection body.

10. Moulding device (100) according to any one of the preceding claims, **characterized in that** the transparent plate (104) and the moulding element (101) form a setback (138) where the injector (109) is arranged.

11. Moulding device (100) according to any one of the preceding claims, **characterized in that**:
- the indentations (102) are intended to participate in the formation of first lenses of a nonimaging optic, and the face (103) of the moulding element (101) in which the indentations (102) are formed is a first face of the moulding element (101),
- the moulding element (101) comprises a second face (140) opposite to its first face (103),
- the moulding element (101) comprises hollows (141) formed in its second face (140), the hollows (141) being intended to participate in the formation of second lenses of the nonimaging optic,
- said moulding device (100) comprises a substrate (142) on which optoelectronic components (143) are connected, said substrate (142) being mounted to the moulding element (101) so that each optoelectronic component (143) is associated with one of the hollows (141).

12. Device (100) according to any one of the preceding claims, **characterized in that** the transparent plate (104) comprises an adhesion primer (150) configured to allow a solidified moulding product present in the cavity (105) to adhere to said transparent plate (104).

13. Method for manufacturing lenses, **characterized in that** it comprises the following steps:
- a step (E1) of supplying a moulding device (100) for forming lenses by moulding, said moulding device (100) comprising:
∘ a moulding element (101) comprising indentations (102) formed in a face (103) of the moulding element (101),
∘ a transparent plate (104) held with respect to the moulding element (101) so as to form, with the indentations (102), a cavity (105) intended to allow the formation of a plurality of lenses,
∘ at least one injection passage (106) intended to allow moulding product to be introduced into the cavity (105), the injection passage (106) being delimited by the transparent plate (104) and the moulding element (101),
∘ a moulding product injector (109) arranged so as to allow moulding product to be introduced into the injection passage (106),
- a step (E2) of injecting a moulding product with the aid of the injector (109), which results in the presence of moulding product in the injector (109), in the injection passage (106), and in the cavity (105),
- a step (E3) of solidifying the moulding product present in the cavity (105), in the injection passage (106) and in the injector (109), the solidified moulding product present in the cavity (105) forming a moulded component (110) comprising the plurality of lenses, the moulded component (110) being fixed to the transparent plate (104), the solidified moulding product present in the injection passage (106) and in the injector (109) forming an element (111) made of solidified moulding product which is connected to the moulded component (110),
- a step (E4) of removing the injector (109), which step is implemented after the solidification step (E3), the removal step (E4) being performed while the transparent plate (104) is still held with respect to the moulding element (101), and the step (E4) of removing the injector (109) causing the element (111) made of solidified moulding product to break.

14. Method of manufacture according to the preceding claim, **characterized in that** the step (E4) of removing the injector (109) comprises a step (E4-1) of moving the injector (109) in an opposite direction to the moulding element (101), and a step (E4-2) of angling the injector (109) with respect to that face of the transparent plate (104) that is oriented toward the moulding element (101).

15. Method of manufacture according to either one of Claims 13 and 14, **characterized in that** it comprises, after the step (E4) of removing the injector (109), a step (E5) of demoulding the moulded component (110) by moving the transparent plate (104) away from the moulding element (101).
